(19) Europäisches Patentamt
European Patent Office
Office européen des brevets

(11) Veröffentlichungsnummer: **0 154 710 B1**

# (12) EUROPÄISCHE PATENTSCHRIFT

(45) Veröffentlichungstag der Patentschrift: **06.03.91**

(51) Int. Cl.$^{5}$: **F02P 5/04**, F02D 41/00

(21) Anmeldenummer: **84115670.6**

(22) Anmeldetag: **18.12.84**

## (54) Einrichtung zur Steuerung von Maschinenvariablen.

(30) Priorität: **01.02.84 DE 3403393**
**07.03.84 DE 3408223**

(43) Veröffentlichungstag der Anmeldung:
**18.09.85 Patentblatt 85/38**

(45) Bekanntmachung des Hinweises auf die Patenterteilung:
**06.03.91 Patentblatt 91/10**

(84) Benannte Vertragsstaaten:
**CH DE FR GB LI**

(56) Entgegenhaltungen:
**EP-A- 0 070 724**
**DE-A- 2 847 021**
**FR-A- 2 333 128**
**FR-A- 2 463 441**
**US-A- 4 197 767**

**MEASUREMENT AND CONTROL, Band 6, Nr. 4, April 1973, Seiten 167-173; G.E. HARLAND u.a.: "Design of a model-reference adaptive control for an internal combustion engine"**

(73) Patentinhaber: **ROBERT BOSCH GMBH**
**Postfach 50**
**W-7000 Stuttgart 1(DE)**

(72) Erfinder: **Grob, Ferdinand, Dipl.-Ing.**
**Friedich-Schelling-Weg 8**
**W-7122 Besigheim(DE)**
Erfinder: **Schmidt, P.-J., Dipl.-Ing.**
**Hermann-Essig-Strasse 106**
**W-7141 Schwieberdingen(DE)**
Erfinder: **Wahl, Josef, Dipl.-Ing.**
**Schlossbergstrasse 4**
**W-7000 Stuttgart 80(DE)**

**EP 0 154 710 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einer Einrichtung zur Steuerung von Maschinenvariablen einer Brennkraftmaschine nach der Gattung des Hauptanspruchs. Derartige Einrichtungen sind schon seit längerem bekannt und beispielsweise in DE-A-28 47 021 bzw. der britischen Parallelanmeldung GB-A 20 34 930B Offenbart. Gegenstand dieser Anmeldung ist eine Vorrichtung zur Regelung von Betriebskenngrößen einer Brennkraftmaschine auf optimale Werte, insbesondere Betriebskenngrößen wie z.B. die Leistung oder der spezifische Kraftstoffverbrauch. Diese Vorrichtung umfaßt eine Steuereinrichtung, mit der die Maschinenvariablen vorgesteuert werden und zu wählbaren Zeiten oder beim Auftreten bestimmter Betriebszustände variierbar sind. Beeinflußt werden die Vorsteuerwerte durch eine Regelung der Brennkraftmaschine auf optimale Leistung bzw. auf minimalen spezifischen Kraftstoffverbrauch. Zur Änderung der vor steuerwerte wird als Regelverfahren eine Extremwertregelung vorgeschlagen.

Obwohl sich diese Vorrichtung an und für sich gut bewährt hat, erweist sie sich unter verschiedenen Gesichtspunkten als verbesserungsfähig. Insbesondere der Einfluß von äußeren Faktoren, wie z.B. der Lufttemperatur oder der höhe, der bei nichtluftmassenmessenden Systemen auf alle Kennfeldwerte des Vorsteuerkennfeldes in gleicher Weise wirkt, läßt sich mit dieser bekannten Einrichtung nicht optimal berücksichtigen.

### Vorteile der Erfindung

Die erfindungsgemäße Einrichtung zur Steuerung von Maschinenvariablen einer Brennkraftmaschine mit den kennzeichnenden Merkmalen des Hauptanspruchs ermöglicht eine schnelle und wirksame Berücksichtigung von die Kennfeldwerte des Vorsteuerkennfeldes beeinflussenden Umgebungsfaktoren. Dadurch, daß der Einfluß dieser Umgebungsfaktoren in einem bestimmten Betriebsbereich der Brennkraftmaschine ermittelt, jedoch in allen Betriebsbereichen der Brennkraftmaschine berücksichtigt wird, ergibt sich in einfacher Weise eine optimale Anpassung des Vorsteuerkennfeldes an die sich ändernden Umgebungsbedingungen der Brennkraftmaschine.

Die EP-A 0 070 724 offenbart "An adaptive strategy to control internal combustion engine". Dabei geht es nach der "Summary of the Invention" darum, Steuergrößen der Maschine zu adaptieren, d. h., unterschiedlichen Betriebszuständen anzupassen. Die Adaptionsstrategie selbst umfaßt eine gewisse Vorsteuerung mit einer ergänzenden Abgasregelung mit Blick auf eine neue Bestimmung der ursprünglichen Steuerwerte. Diese neue Bestimmung der Werte selbst kann bezüglich Zeitpunkt und Häufigkeit von verschiedenen Parametern abhängen. Dabei ist es bei der Adaption von Steuerwerten üblich, sie während spezieller Betriebszustände für spezielle Betriebsbereiche durchzuführen. Diese Adaptionseinrichtung hat sich noch nicht als optimal für einen umfassenden Einsatz in der Brennkraftmaschinensteuerung erwiesen.

Aufgabe der Erfindung ist es deshalb, eine Einrichtung zur Steuerung von Maschinenvariablen einer Brennkraftmaschine zu schaffen, die möglichst umfassend anwendbar ist und dabei gute Ergebnisse liefert.

Gelöst wird diese Aufgabe mit der Merkmalskombination des Anspruchs 1.

(Fortsetzung ursprüngliche Seite 2, Vorteile der Erfindung)

Insbesondere dadurch, daß die der Vorsteuerung Überlagerte Regelung als Extremwertregelung auf maximale Leistung ausgebildet ist ergibt sich ein sehr Schneller und damit präziser Regelvorgang.

Weiterhin erweist es sich als sehr vorteilhaft daß während der Zeitdauer des Wirksamwerdens der Regelung auf maximale Leistung Maßnahmen ergriffen werden die eine vom Fahrer des mit dieser Brennkraftmaschine ausgerüsteten Kraftfahrzeuges unerwünschte erhöhte Leistungsabgabe vermeiden. Je nach Kraftstoffzumeßsystem Kann es sich als sinnvoll erweisen, entweder den Zündzeitpunkt oder aber die Kraftstoffzumessung zu einzelnen Zylindern der Brennkraftmaschine zu variieren.

Weitere Vorteile und vorteilhafte Ausgestaltungen der Erfindung ergeben sich in Verbindung mit den Unteransprüchen aus der nachfolgenden Beschreibung der Ausführungsbeispiele und der Zeichnung.

### Zeichnung

Ausführungsbeispiele der Erfindung sind in der Zeichnung dargestellt und in der nachfolgenden Beschreibung näher erläutert. Es zeigen:

Figur 1a mittlerer Nutzdruck $p_e$ einer Brennkraftmaschine aufgetragen über der Luftzahl $\lambda$ mit dem Parameter Kraftstoff- bzw. Luftmenge,

Figur 1b Zusammenhang zwischen Luft- bzw. Kraftstoffmenge und der Luftzahl λ für einen vorgegebenen konstanten Mitteldruck $p_e$,
Figur 2 Blockschaltbild einer ersten Ausführungsform mit Extremwertregelung,
Figur 3 Prinzipdarstellung einer Extremwertregelung,
Figur 4 Amplitude und Phasenlage eines Bandpasses in einer Extremwertregelung,
Figur 5 Prinzipschaltbild einer zweiten Ausführungsform mit λ -Regelung,
Figur 6a der Vorsteuerung überlagerte Regelung mit multiplikativem bzw. additivem Eingriff,
Figur 6b der Vorsteuerung überlagerte Regelung zur individuellen Kennfeldanpassung,
Figur 7a Anpassung von Kennfeldeinzelwerten,
Figur 7b Anpassung von Kennfeldbereichen,
Figur 7c multiplikative Anpassung des gesamten Kennfeldes,
Figur 8 Kennfeldlernverfahren,
Figur 9 Kennfeldausschnitte mit Stützstellen,
Figur 10 Kennfeldlernverfahren mit Mittelwertbildung,
Figur 11 Blockschaltbild einer dritten Ausführungsform,
Figur 12 ∝-n-Kennfeld für die Einspritzzeit $t_i$,
Figur 13 Schaltungsaufbau für eine ∝-n-Gemischvorsteuerung mit einer additiven Regelung,
Figur 14a Dremoment einer Brennkraftmaschine aufgetragen über der Einspritzzeit für konstante Drehzahl n und Luftmenge $Q_L$,
Figur 14b Wirkungsgrad bzw. spezifischer Kraftstoffverbrauch aufgetragen über der Einspritzzeit für konstante Drehzahl n und Luftmenge $Q_L$,
Figur 15 Blockschaltbild einer vierten Ausführungsform,
Figur 16 ∝-n-Kennfeldausschnitt für die Einspritzzeit,
Figur 17 Blockschaltbild einer fünften Ausführungsform.


Beschreibung der Ausführungsbeispiele

Dem Entwurf von Einrichtungen zur Kraftstoff-Luft-Gemischzumessung für Brennkraftmaschinen liegen im allgemeinen folgende Anforderungen zugrunde:

Erzielung eines minimalen spezifischen Kraftstoffverbrauchs, Einhaltung geringer Abgasemission und Gewährleistung eines befriedigenden Fahrverhaltens.

Dabei werden im allgemeinen verschiedene, weiter unten teilweise beschriebene Regelverfahren eingesetzt, wodurch der Einsatz von einfachen und kostengünstigen Gebern und Stellern ermöglicht, Wartungsfreiheit und eine Erhöhung der Langzeitstabilität garantiert wird. Ebenso können Exemplarstreuungen vernachlässigt werden, ist eine Austauschbarkeit von beispielsweise Gebern gewährleistet und eine erleichterte Anpassung der Einrichtung an verschiedene Motortypen gegeben. Durch den Einsatz von Regelungen ergeben sich weiterhin funktionelle Verbesserungen wie die Optimierung des Betriebsverhaltens der Brennkraftmaschine in der Start-, Warmlauf- und Leerlaufphase sowie im Vollastbereich. Das gleiche gilt für instationäre Phasen der Brennkraftmaschine, beispielsweise während des Beschleunigungs- oder Schub-betriebs.

Im Gegensatz zu einem geregelten System, bei dem möglicherweise auftretende Störgrößen erfaßt werden, jedoch die Anpassung der Brennkraftmaschine an die neuen Bedingungen recht langsam aufgrund von ungleichmäßigen Verbrennungsvorgängen, Gaslaufzeiten usw. vor sich geht, ermöglichen Steuersysteme eine sehr schnelle Anpassung an geänderte Eingangsbedingungen. Hingegen können die Störgrößen nur unvollständig oder mit erheblichem Aufwand berücksichtigt werden. Durch die Verwendung eines selbstanpassenden Kennfeldes, wobei das Kennfeld Vorsteuerwerte liefert, die von einer überlagerten Regelung beeinflußt werden, sollen die jeweiligen Vorteile von gesteuerten und geregelten Systemen benutzt werden.

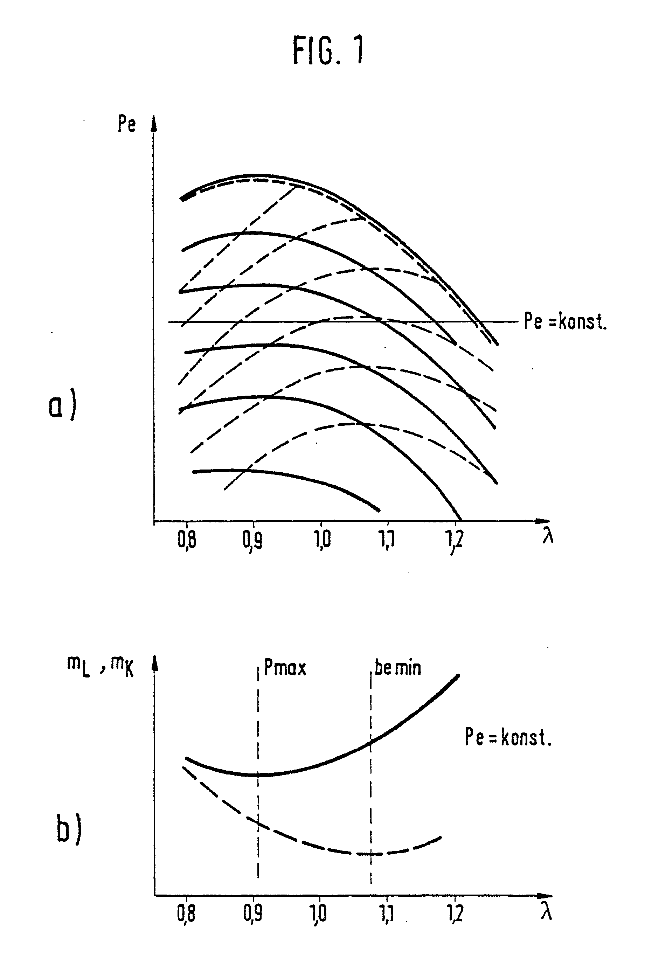

Zur kurzen Erläuterung der Regelverfahren ist in Figur 1 ein Kennlinienfeld einer Otto-Brennkraftmaschine dargestellt. In Figur 1a ist der zur Leistung proportionale mittlere Nutzdruck aufgetragen über der Luftzahl λ mit der Kraftstoffmenge (gestrichelte Linien) bzw. der Luftmenge (durchgezogene Linien) als Parameter aufgetragen. Aus diesen Kennlinien ergibt sich, daß ein vorgegebener mittlerer Nutzdruck bzw. eine vorgegebene Leistung (hier ein mittlerer Nutzdruck $p_e$ = 5 Bar) in den vorgegebenen Grenzen mit jedem beliebigen λ realisiert werden kann. Die geringste Kraftstoffmenge wird dabei bei einem Luftverhältnis von etwas kleiner als λ = 1,1 benötigt. Dies ergibt sich aus der Tatsache, daß die Kurven für konstante Kraftstoffmenge im Bereich λ = 1 ,1 ein Maximum aufweisen. Im Gegensatz dazu ergibt sich das Leistungsmaximum für die Kurven konstanter Luft menge bei Lambda-Werten in der Gegend von λ =0,9.

Im ersten Fall, nämlich für eine vorgegebenen konstante Kraftstoffmenge wird eine maximale Leistung der Brennkraftmaschine dann erreicht, wenn die Luftmenge derart zugemessen wird, daß das Luft-Kraftstoff-Gemisch einen Lambda-Wert von $\lambda$ =1,1 annimmt. Wird bei einem kraftstoffgeführten Einspritzsystem die Luft in der Weise nachgeführt, daß sich ein Leistungsmaximum ergibt, so wird die Brennkraftmaschine automatisch im Bereich eines minimalen spezifischen Kraftstoffverbrauchs betrieben.

Im zweiten Fall, in dem die Brennkraftmaschine bei Vorgabe einer konstanten Luftmenge für eine maximale Leistungsabgabe bei $\lambda$ = 0,9 betrieben wird, liegt ein Betrieb auf maximale Leistung vor. Dieser Zusammenhang wird aus der Figur 1b deutlich, bei der die in Abhängigkeit vom Lambda-Wert zuzumessende Luft- bzw. Kraftstoffmenge für einen vorgegebenen, konstanten mittleren Nutzdruck aufgetragen ist. Dieser mittlere Nutzdruck wird mit einem Minimum an Kraftstoff erreicht, wenn der Lambda-Wert des Luft-Kraftstoff-Gemisches bei $\lambda$ = 1,1 liegt. Dieser Punkt ist somit identisch mit dem minimalen spezifischen Kraftstoffverbrauch $be_{min}$. Dagegen gehört zur minimalen Luftmenge, mit der dieser mittlere Nutzdruck zu erzielen ist, ein Luft-Kraftstoff-Gemisch mit Werten von $\lambda$ = 0,9. Hier liegt also bei vorgegebener Luftmenge eine maximale Leistungsabgabe $P_{max}$ der Brennkraftmaschine vor.

Aufgrund dieser Zusammenhänge bieten sich folgende Regelverfahren für die Gemischzumessung bei einer Brennkraftmaschine an: Im gesamten Teillastbereich wird auf einen minimalen spezifischen Kraftstoffverbrauch der Brennkraftmaschine, also auf ein Maximum der in Figur 1a gestrichelt dargestellten Kurven geregelt ($be_{min}$-Regelung). Im Voll-lastfall wird dagegen auf ein Leistungsmaximum, d.h. auf ein Maximum der in Figur 1a durchgezogen dargestellten Kurven geregelt ($P_{max}$-Regelung). Da in beiden Fällen der Sollwert durch ein Maximum der Leistungsabgabe der Brennkraftmaschine bei vorgegebener Kraftstoff- bzw. Luftmenge gegeben ist, bietet sich eine Extremwertregelung an. Ebenso ist aber auch eine Lambda-Kennfeld-regelung denkbar, mit der in Abhängigkeit von der Leistungsabgabe der Brennkraftmaschine die entsprechenden Lambda-Werte des Luft-Kraftstoff-Gemisches vorgegeben werden.

Regelsysteme für Brennkraftmaschine wie beispielsweise eine Lambda-Regelung, eine Klopfregelung oder auch Zündzeitpunktregelung können wegen der vorhandenen Tot- oder Laufzeiten nur relativ langsam auf Störgrößen reagieren. Es hat sich deshalb als äußerst vorteilhaft erwiesen, für die schnellen und dynamischen Vorgänge innerhalb einer Brennkraftmaschine eine Vorsteuerung einzusetzen. Die überlagerte Regelung kann beispielsweise multiplikativ oder auch additiv auf diese Vorsteuerwerte eingreifen. Durch den Einsatz moderner elektronischer Mittel beispielsweise,Speicher und Mikrocomputer ist es ebenso möglich, die Vorsteuerung durch ein Kennfeld, dessen Kennfeldwerte beispielsweise in Abhängigkeit von der Drehzahl und der Last der Brennkraftmaschine adressierbar sind, zu realisieren. Die überlagerte Regelung kann dann einerseits die ausgelesenen Kennfeldwerte wiederum multiplikativ oder auch additiv Beeinflussen ohne die im Speicher abgelegten Kennfeldwerte zu verändern. Es ist andererseits jedoch auch möglich, die Kennfeldwerte an sich mittels der überlagerten Regelung zu verändern. Wird der Einfluß von Störgrößen ständig durch geänderte Kennfeldwerte berücksichtigt, so spricht man von einem selbstanpassenden oder auch von einem lernenden Kennfeld. Wie im weiteren aufgezeigt wird, kann auch eine Kombination der beiden zuletzt beschriebenen Verfahren sehr vorteilhaft sein.

Der grundsätzliche Aufbau des Systems verwendet ein Kennfeld, dessen Eingangsgrößen im einfachsten Fall die Drehzahl n und die Drosselklappenstellung $\alpha$ sind. Bei der erstmaligen Initialisierung werden relativ grobe Anfangswerte in dieses Kennfeld geladen. Im Betrieb findet dann eine laufende Anpassung statt. Ein wesentliches Konzept besteht darin, das Kennfeld in verschiedene Bereiche, beispielsweise in Leerlauf-, Teillast-, Vollast-und Schubbereich zu unterteilen. Mit Ausnahme des Schiebebetriebes ist in jedem Bereich ein bestimmtes Regelkonzept vorgesehen, das diesen Bereich an die jeweiligen Anforderungen anpaßt, so daß ein "lernendes" Kennfeld vorliegt. Wird das Kraftfahrzeug außer Betrieb gesetzt, so besteht die Möglichkeit, das zuletzt gelernte Kennfeld zu speichern und bei einem neuen Start wieder als Anfangskennfeld zu benutzen.

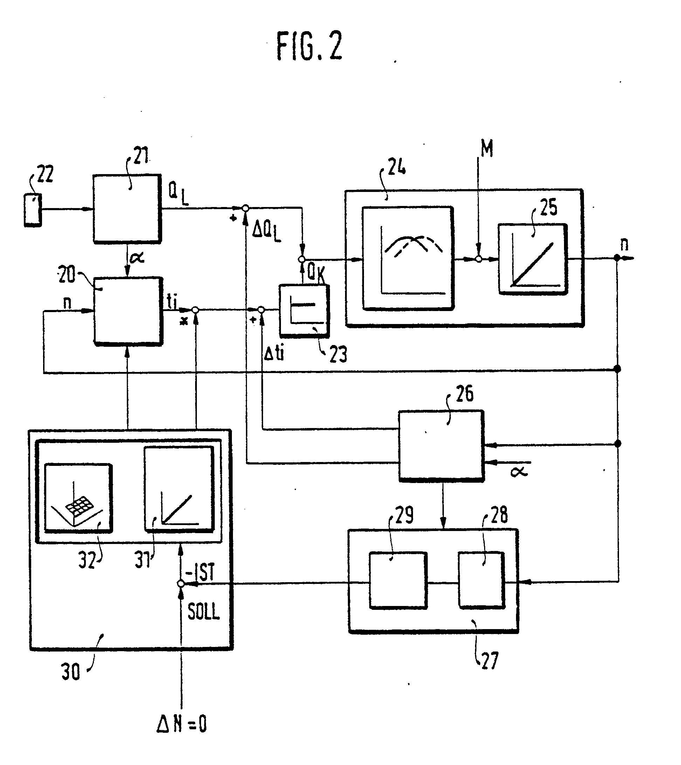

In Figur 2 ist das Blockschaltbild einer ersten Ausführungsform des Gesamtsystems dargestellt. Die Steuerung der der Brennkraftmaschine zuzumessenden Kraftstoffmenge erfolgt über ein Kennfeld 20, dem als Eingangsgrößen die Drehzahl n und die Drosselklappenstellung $\alpha$ einer Drosselklappe 21 zugeführt werden. Dabei wird die Drosselklappe von einem Fahrpedal 22 angesteuert. Die im Kennfeld 20 abgespeicherte Einspritzzeit $t_i$ wird über ein Einspritzventil 23 in eine entsprechende Kraftstoffmenge $Q_K$ umgesetzt. Diese Kraftstoffmenge $Q_K$, sowie die durch die Drosselklappenstellung bestimmte Luftmenge $Q_L$, werden einer symbolisch dargestellten Brennkraftmaschine 24 zugeführt, wobei in Abhängigkeit vom Lambda-Wert des Luft-Kraftstoff-Gemisches ein gewisses Drehmoment M bewirkt wird. Die Regelstrecke "Brennkraftmaschine" kann grob schematisch durch einen Integrator 25 angenähert werden. Die Ausgangsgröße n der Brennkraftmaschine wird zur Ansteuerung des Kennfeldes 20 verwendet. Bei diesen bisher beschriebenen Teil des Gesamtsystems handelt es sich um eine reine Steuerung der Gemischzusammensetzung.

Die überlagerte Regelung basiert in diesem Ausführungsbeispiel auf einer Extremwertregelung. Dazu wird je nach Regelverfahren (siehe hierzu die Ausführungen weiter unten) entweder die Luftmenge $Q_L$ beispielsweise über einen Bypaß mit einem Hub $\Delta Q_L$ oder die Einspritzzeit $t_i$ mit einem Hub $\Delta t_i$ gewobbelt. Die hierzu notwendigen Testsignale erzeugt ein Testsignalgenerator 26. Dieser Testsignalgenerator wirkt je nach Regelverfahren auf die Kraftstoff-bzw. die Luftmenge, wobei die Wobbelfrequenz konstant oder aber drehzahlabhängig gewählt werden kann. Die durch das Testsignal erzeugten Drehmomentänderungen der Brennkraftmaschine wirken sich als Drehzahländerungen aus, so daß durch eine Meßeinrichtung 27, die mit drehzahlproportionalen Signalen beaufschlagt wird, diese Drehmomentänderungen analysiert werden können. Die Meßeinrichtung 27 besteht aus einem vorzugsweise digitalen Filter 28 sowie einer darauffolgenden Auswerteeinheit 29, die das gefilterte Signal hinsichtlich Betrag und/oder Phase untersucht und mit den Ausgangssignalen des Testsignalgenerators 26 vergleicht. Es hat sich als vor teilhaft erwiesen, das Filter 28 in digitaler Technik aufzubauen. Es arbeitet zeitdiskret, wobei die Abtastrate wahlweise in festem Zeitraster oder proportional zur Drehzahl sein kann. Da das Filter genau auf die Wobbelfrequenz abgestimmt ist, können Störsignale weitgehend unterdrückt werden. In einem Regler 30 findet ein Vergleich zwischen vorzugsweise der Phasenlage des Filter-Ausgangssignals und einem Phasensollwert statt, wobei die Differenz dieser beiden Signale einem Integrator 31 zugeführt wird, der im einfachsten Fall als Vor-Rückwärtszähler ausgebildet sein kann. Zum einen kann das Ausgangssignal dieses Integrators 31 zu einer multiplikativen Beeinflussung des Kennfeldes verwendet werden. Wie noch weiter unten zu zeigen ist, können sich auch Kennfeldlernverfahren als sinnvoll erweisen, bei denen einzelne Bereiche des Kennfeldes gezielt angepaßt werden. Derartige Verfahren sind schematisch durch den Block 32 dargestellt.

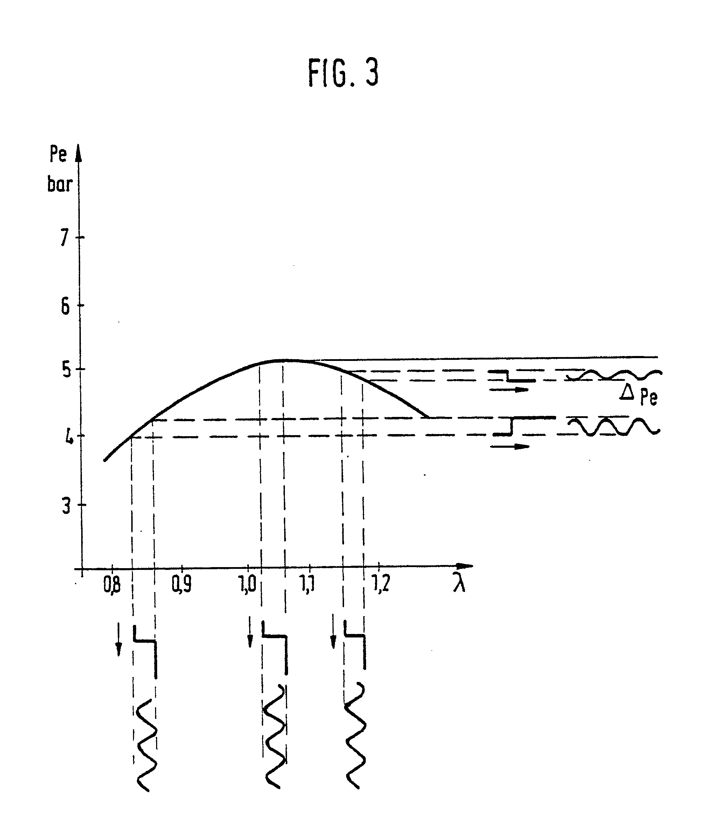

Zur Erläuterung der Funktionsweise des Systems der Figur 2 dient die Prinzipdarstellung einer Extremwertregelung der Figur 3.

In Figur 3 ist aufgetragen der mittlere Nutzdruck $p_e$ in Abhängigkeit vom Lambda-Wert des Luft-Kraftstoff-Gemisches. Der Eingangsgröße, dem LuftKraftstoff-Gemisch mit vorgegebenen Lambda-Wert wird ein Testsignal überlagert, das entweder sporadisch auftritt und beispielsweise die Form einer Treppenfunktion oder aber periodisch auftritt und Sinus- oder Rechteckform aufweist. Die Reaktion der Brennkraftmaschine auf diese Testsignale kann über die Änderung des mittleren Nutzdruckes $p_e$, besonders vorteilhaft jedoch über die Momentenänderung bzw. die damit verbundene Drehzahländerung erfaßt werden. Wie aus der Figur 3 hervorgeht, ist als zu analysierende Größe entweder die Amplitudenänderung des mittleren Nutzdrucks (bzw. des Moments oder der Drehzahl) oder aber die Phase dieser Ausgangsgröße in Relation zur Phase der Testsignale geeignet.

Die Überlagerung des Testsignals auf die Eingangsgröße erfolgt bei der $be_{min}$-Regelung durch Luftwobbeln beispielsweise über einen Bypaß und bei der $P_{max}$-Regelung über eine Wobblung der zuzumessenden Kraftstoffmenge bzw. der Einspritzzeit. Diese Regelverfahren werden beim Ausführungsbeispiel der Figur 2 verwendet.

Über die Drosselklappe 21 sowie über das $\alpha$-n-Kennfeld 20 für die Einspritzzeit wird eine grobe Vorsteuerung des Lambda-Wertes des Luft-Kraftstoff-Gemisches vorgegeben. Die überlagerte Regelung umfaßt einen Testsignalgenerator 26, eine die Drehzahländerungen auswertende Meßeinrichtung 27 sowie einen Regler 30, der das Kennfeld 20 beeinflußt. Je nach Regelverfahren findet ein Wobbeln der zuzumessenden Luftmenge um $\Delta Q_L$ bzw. der zuzumessenden Kraftstoffmenge beispielsweise über die Einspritzzeitänderung $\Delta t_i$ statt. Die Figur 2 ist derart zu verstehen, daß die Signale des Testsignalgenerators 26 entweder die zuzumessende Luftmenge oder die zuzmessende Kraftstoffmenge beeinflussen. Die Reaktion der Brennkraftmaschine 24 auf dieses Wobbeln des zugeführten Luft-Kraftstoff-Gemisches kann beispielsweise über Änderungen der Drehzahl analysiert werden. Hierzu dient eine Meßeinrichtung 27, die im vorliegenden Spezialfall aus einem digitalen Filter 28 zur Unterdrückung von Störfrequenzen sowie aus einer Auswerteeinheit 29, die die Drehzahländerungen hinsichtlich des Betrages und der Phase auswertet. Die Ausgangsgröße dieser Meßeinrichtung 27 wird als Istwert der Drehzahländerungen mit dem für eine Extremwertregelung typischen Soll wert $\Delta n = 0$ der Drehzahländerungen verglichen, wobei die Abweichung zwischen Ist- und Sollwert über die Blöcke 31 bzw. 32 auf das Kennfeld 20 auf unterschiedliche, weiter unten noch zu erläuternde Weise einwirkt.

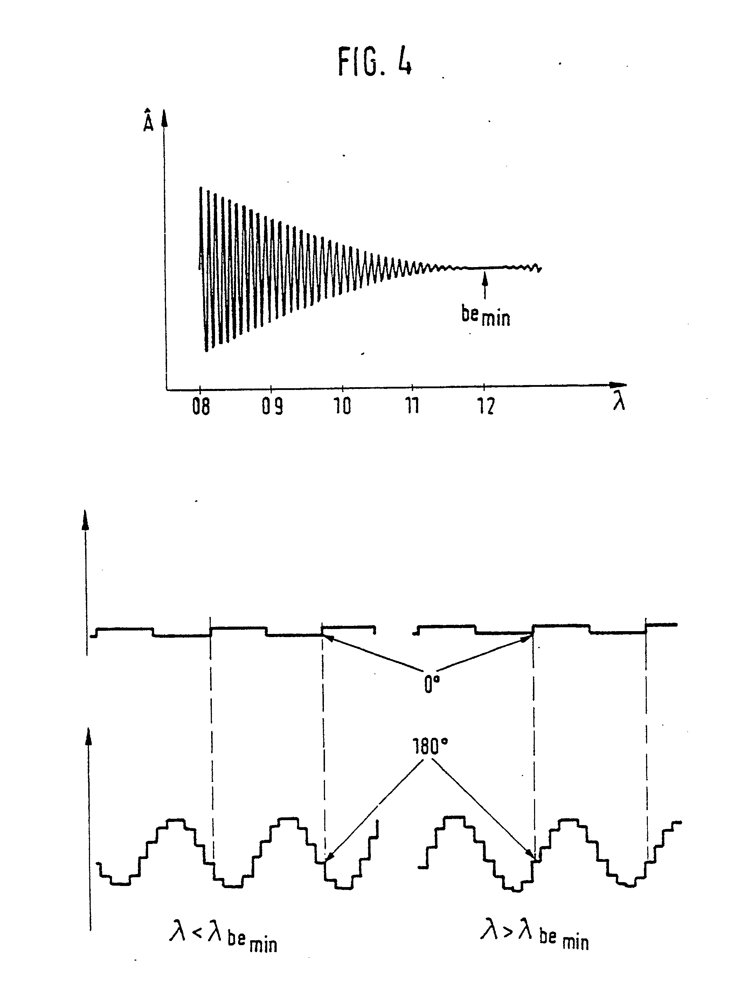

In Figur 4 ist zur Verdeutlichung der Funktionsweise der Auswerteeinheit 29 das Ausgangssignal des Bandpasses aufgetragen, und zwar im oberen Teil die Amplitude in Abhängigkeit von Lambda und im unteren Teil die Phasenlage für zwei Lambda-Werte oberhalb und unterhalb des Idealwertes, dem $be_{min}$-Punkt, auf den die Figur 4 spezialisiert wurde. Für eine Regelung auf Leistungsmaximum $P_{max}$ würden sich die Verhältnisse in gleicher Weise ergeben, wobei nur der Lambda-Wert im fetten Bereich liegen würde. Die Ausgangsamplitude des Bandpasses ist ein Maß für die Größe der Drehzahländerungen. Entsprechend den Darstellungen der Figur 3 nimmt die Änderung der Ausgangsamplitude des Bandpasses genau im Extremwert den Wert 0 an. Nach beiden Seiten abweichend vom Optimalwert nimmt die Amplitude stetig

zu. Der Wert der Amplitude alleine sagt jedoch nicht aus, auf welcher Seite des Extremwerts man liegt. Der Extremwert wird deshalb über eine Auswertung der Phase des Ausgangssignals des Filters 28 bestimmt. Ebenso wäre es möglich, die Amplitudenänderung als Meßgröße heranzuziehen.

Im unteren Teil der Figur 4 ist zum einen ein Testsignal willkürlicher, hier rechteckiger Form, und im Vergleich dazu die Ausgangsgröße des Filters aufgetragen. Je nach dem, ob sich der Lambda-Wert des Kraftstoff-Gemisches ober- oder unterhalb des $be_{min}$-Punktes befindet, weist das Ausgangssignal des Filters eine unterschiedliche Phasenverschiebung bezüglich des Testsignals auf. Entsprechend der Phasenlage läßt sich hiermit eindeutig feststellen, ob das Gemisch in Bezug auf den $be_{min}$-Punkt zu fett oder zu mager ist.

Im Regler 30 der Figur 2 findet nun ein Vergleich statt zwischen der Phasenlage des Ausgangssignals des Filters 28 und einem Phasensollwert für den $be_{min}$-Punkt statt. Die Differenz dieser beiden Signale wird im einfachsten Falle integriert, wozu in einer digitalen Ausführungsform beispielsweise ein Vor-Rückwärtszähler benutzt werden kann. Der Zählerstand entspricht einem Faktor, mit dem das Einspritzkennfeld multipliziert oder ein bestimmter Kennfeldbereich modifiziert wird. Bei der $be_{min}$-Regelung muß die Luft gewobbelt werden, so daß wegen der großen Strecke zwischen dem Bypaß an der Drosselklappe, mit dem die Luftmenge gewobbelt wird,und den Zylindern Laufzeiten entstehen, durch die die Wobbelfrequenz limitiert wird. Wegen des Vorhandenseins von fahrzeugspezifischen Resonanzfrequenzen kann der Phasensollwert für den $be_{min}$-Punkt drehzahl- und eventuell auch lastabhängig verschoben werden.

Eine $P_{max}$-Regelung ist für den oberen Lastbereich vorgesehen; sie soll dafür sorgen, daß die Brennkraftmaschine bei großer Last immer die für die gegebene Drosselklappenstellung maximal mögliche Leistung-abgibt. In diesem Fall wird jedoch nicht die Luft, sondern die Kraftstoffmenge beispielsweise über die Einspritzzeit gewobbelt. Die Meßeinrichtung und der Regler sind identisch aufgebaut.

Da die Einspritzventile unmittelbar vor den Einlaßventeilen der einzelnen Zylinder sitzen, entstehen wesentlich geringere Laufzeiten gegenüber denen der $be_{min}$-Regelung. Bei dem im vorliegenden Ausführungsbeispiel verwendeten Vierzylinder-Motor mit Einkanal-Einspritzung, d.h. parallel geschaltete Einspritzventile und zwei Einspritzungen pro zwei Kurbelwellen-Umdrehungen,müssen immer mindestens zwei Impulse angefettet und abgemagert werden. Daraus ergibt sich die höchstmögliche Wobbelfrequenz, die etwa um einen Faktor vier über der Wobbelfrequenz der $be_{min}$-Regelung liegt. Entsprechend ist natürlich auch das Filter 28 angepaßt.

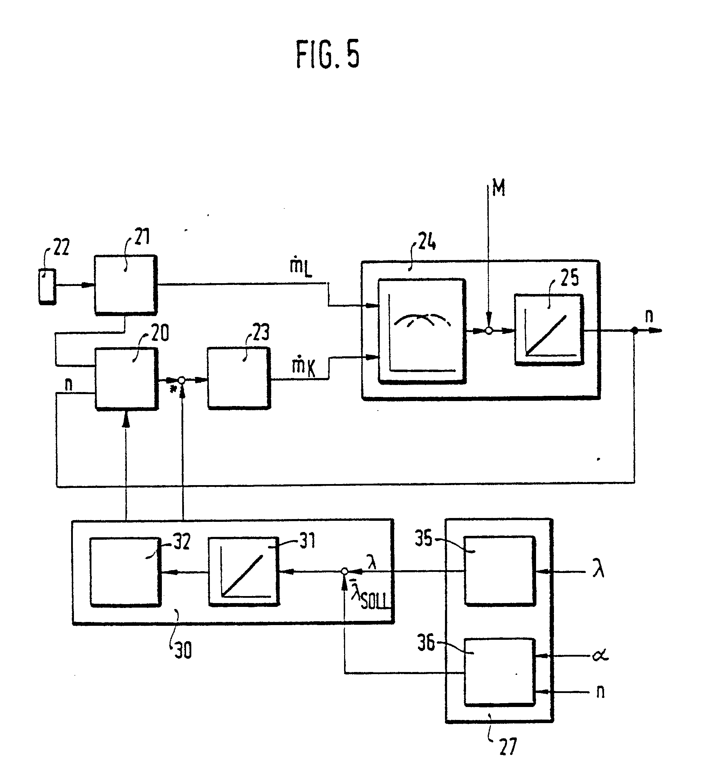

Ein zweites Ausführungsbeispiel des Gesamtsystems, bei dem die der Vorsteuerung überlagerte Extremwertregelung durch eine Lambda-Regelung ersetzt ist, ist in Figur 5 dargestellt. Zur Figur 2 identische Blöcke wurden mit den gleichen Ziffern bezeichnet und werden im folgendem nicht näher erläutert. Der Unterschied des Gegenstandes der Figur 5 zu dem der Figur 2 liegt darin begründet, daß die Beeinflussung des Kennfeldes 20, in dem die Einspritzzeiten $t_i$ in Abhängigkeit von der Drosselklappenstellung $\propto$ und der Drehzahl n abgelegt sind, ausgehend von den Ausgangssignalen einer dem Abgas der Brennkraftmaschine ausgesetzten Sauerstoffsonde durchgeführt wird. Im vorliegenden Ausführungsbeispiel besteht die Meßeinrichtung 27 aus einem Lambda-Sollkennfeld 36, dem als Eingangsgrößen die Drosselklappenstellung sowie die Drehzahl n zugeführt werden, und aus einer Aufbereitungsschaltung 35, an die die nicht näher dargestellte Sauerstoffsonde angeschlossen ist. Bei der Sauerstoffsonde kann es sich um die verschiedensten Ausführungsformen, beispielsweise eine ($\lambda = 1$)-Sonde, eine beheizte Magersonde oder auch eine Grenzstromsonde, wie sie alle hinreichend aus der Literatur bekannt sind, handeln. Darüber hinaus bleibt der Gegenstand der Figur 5 nicht nur auf Sauerstoffsonden beschränkt, sondern umfaßt jede Art von Abgassensoren, wie sie beispielsweise als CO-Sonden oder auch Abgastemperatursonden bekannt sind.

In dem Lambda-Sollkennfeld sind in Abhängigkeit von den Parametern Drosselklappenstellung $\propto$ und Drehzahl n vorgegebene Festwerte für den Lambda-Wert für die verschiedensten Fahrsituationen einer Brennkraftmaschine abgelegt. In einem Vergleicher werden diese Lambda-Sollwerte, die im einfachsten Fall den Wert $\lambda = 1$ annehmen, mit dem Lambda-Istwerten, die von der Aufbereitungsschaltung 35 geliefert werden, verglichen. Mittels dieser Soll-Istwert-Abweichung des Lambda-Wertes wird die Serienschaltung aus den Blöcken 31 und 32 beaufschlagt, die ihrerseits auf das Kennfeld 20 entweder in multiplikativer Weise global einwirken oder aber gezielt bestimmte betriebsparameterabhängige Kennfeldbereiche beeinflussen. Für das Lambda-Soll-Kennfeld 36 kann als grober Richtwert folgende Voreinstellung, die sich natürlich von einem Fahrzeugtyp zum anderen ändern kann, angegeben werden. Die Lambda-Sollwerte nehmen für den Vollast- sowie für den Leerlaufbereich etwa Werte in der Gegend $\lambda = 1$ und im Teillastbereich Werte $\lambda > 1$ an.

Dieses zweite Ausführungsbeispiel weist gegenüber dem ersten Ausführungsbeispiel der Figur 2 den Vorteil auf, daß der elektronische sowie mechanische Aufwand für die der Vorsteuerung überlagerte Regelung in Grenzen gehalten wird. Zum einen entfällt ein Testsignalgenerator sowie das mechanische

Stellglied zum Wobbeln der zugeführten Luftmenge und zum anderen ist die Meßeinrichtung 27 mit der Aufbereitungsschaltung 35 und dem Lambda-Soll-Kennfeld 36 relativ unaufwendig. Andererseits ist eine sehr präzise und abgewogene Voreinstellung der Kennfeldwerte des Lambda-Soll-Kennfeldes erforderlich, die darüber hinaus für verschiedene Brennkraftmaschinentypen auch unterschiedliche Werte annehmen kann.

Insbesondere für das Ausführungsbeispiel der Figur 2, bei dem ein Luftbypaß zum Wobbeln der zugeführten Luftmenge vorgesehen ist, läßt sich vorteilhaft eine Leerlauf-Füllungsregelung einsetzen, mit der die LL-Drehzahl der Brennkraftmaschine unabhängig von Laständerungen, wie sie beispielsweise durch das Einschalten der Klimaanlage oder ähnliches hervorgerufen werden, konstant gehalten wird. Eine derartige Leerlauf-Füllungsregelung ist beispielsweise aus der deutschen Offenlegungsschrift DEOS 31 20 667 der Anmelderin bekannt.

Im folgenden wird nun näher auf das Prinzip der Anpassung von Kennfeldern, wie sie schon für Einspritzsysteme, Vergasersysteme und auch Zündsysteme bekannt sind, eingegangen. Eine grobe Klassifizierung der

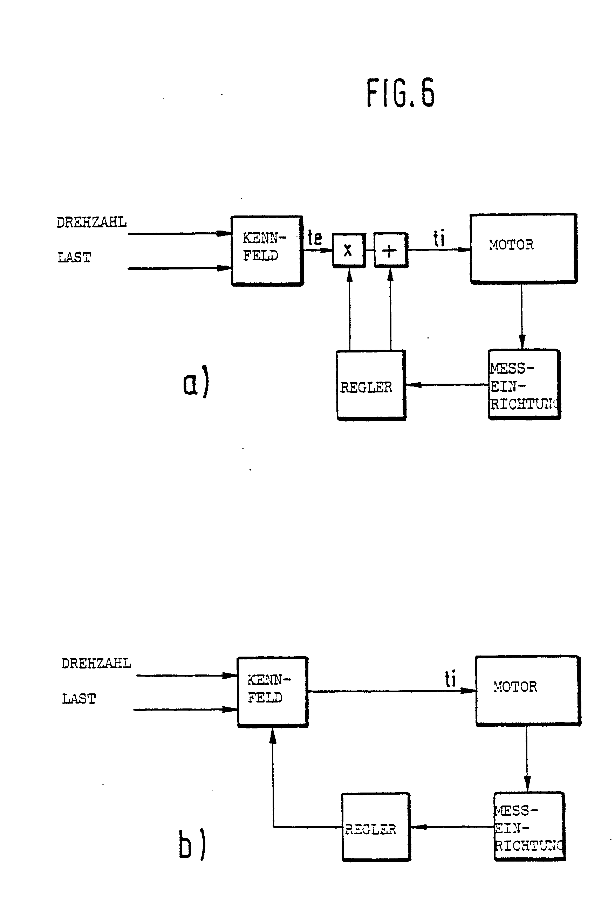

Kennfeldanpassungsverfahren läßt sich folgendermaßen angeben: In Figur 6a ist eine Möglichkeit dargestellt, bei der die Kennfeldwerte für eine Vorsteuerung der Einspritzzeit unverändert bleiben, jedoch über die überlagerte Regelung multiplikative oder auch additive Korrekturen an den Ausgangsgrößen des Kennfeldes angebracht werden können. Die Kennfeldwerte an sich lassen sich jedoch durch die überlagerte Regelung nicht ändern. Der Vorteil dieses Verfahrens liegt darin begründet, daß das Verfahren sehr einfach und kostengünstig durchzuführen ist. Nachteilig wirkt sich jedoch aus, daß ein einmal vorgegebenes Kennfeld nicht mehr in seiner Struktur modifiziert wird.

In Figur 6b ist dagegen ein Kennfeldlernverfahren angegeben, bei dem die einzelnen Kennfeldwerte des Kennfeldes laufend durch die überlagerte Regelung angepaßt werden. Genauer gesagt heißt dies, daß in ,jedem durch die Eingangsgrößen vorgegebenen Betriebspunkt die zuge hörige Kennfeldausgangsgröße durch ein Regelverfahren an den jeweiligen Optimalwert angepaßt wird. Beim Verlassen des jeweiligen Betriebspunktes wird die zuletzt ermittelte Ausgangsgröße abgespeichert und bleibt unverändert, bis dieser Betriebspunkt wieder angewählt wird. Vorteilhaft an diesem Verfahren erweist sich, daß das Kennfeld jeder beliebigen Struktur angepaßt werden kann. Nicht so vorteilhaft ist die Tatsache, daß zur Änderung des gesamten Kennfeldes alle Kennfeldausgangsgrößen einzeln angesteuert werden müssen. Dies ist jedoch nicht immer gewährleistet, da zum einen verschiedene Betriebspunkte, sehr selten oder nie angesteuert werden und da zum anderen die Verweildauer in den einzelnen Betriebspunkten häufig so kurz ist, daß keine Anpassung erfolgen kann.

Die Nachteile beider Verfahren können in vorteilhafter Weise durch einen Kompromiß gelöst werden, der zwischen diesen beiden extremen Möglichkeiten liegt. Zusätzlich zur unmittelbar angesteuerten Ausgangsgröße wird ein Bereich um diese Größe herum beeinflußt, wobei diese Beeinflussung benachbarter Kennfeldwerte mit wachsendem Abstand von der jeweiligen Ausgangsgröße abnimmt. Als besonders vorteilhaft an diesem Kompromiß erweist sich, daß eine nahezu beliebige Anpassung des Kennfeldes möglich ist und außerdem auch Bereiche beeinflußt werden, die nie oder nur selten angesteuert werden.

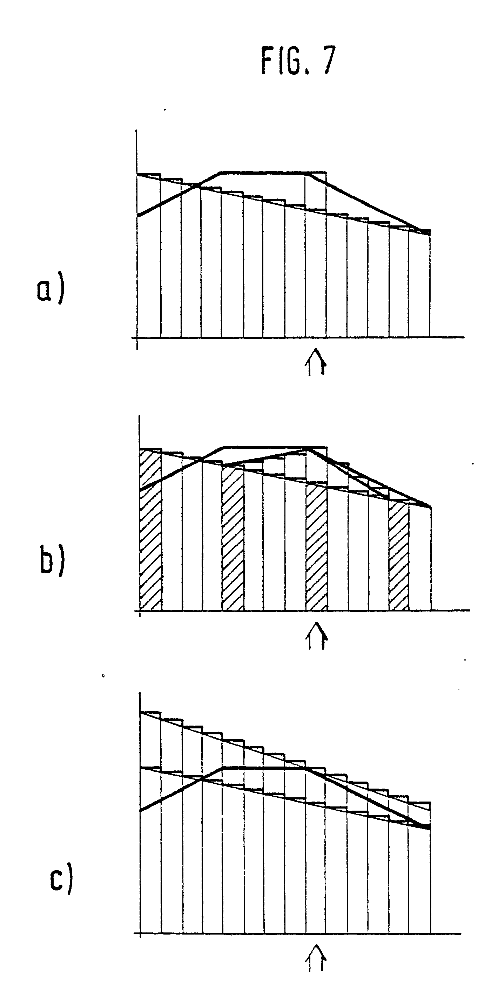

Anhand der Figur 7, die einen Schnitt durch ein histogrammartig dargestelltes Istwert-Kennfeld mit den entsprechenden, durch eine durchgezogene Linie gekennzeichneten Sollwerten wiedergibt, sollen die oben erläuterten Anpassungsverfahren veranschaulicht werden. In Figur 7a ist die Anpassung von Einzelwerten dargestellt, wobei die angesteuerte Ausgangsgröße durch einen Pfeil gekennzeichnet ist. Obwohl dieser Einzelwert gemäß dem Sollwertverlauf durch die Regelung richtig angepaßt ist, kann die Struktur des Istwertkennfeldverlaufes den Sollwert nur nach Anfahren aller Kennfeldwerte nachgeführt werden. Beim Verlassen der angesteuerten Ausgangsgröße und Übergang zu einer eng benachbarten Kennfeldgröße muß diese in ähnlicher Richtung angepaßt werden wie die vorherigen Werte. Der andere Extremfall, nämlich der einer multiplikativen Anpassung des Gesamtkennfeldes ist in Figur 7c dargestellt. Aus der Abweichung der mit einem Pfeil gekennzeichneten Kennfeldgröße vom Sollwert wird ein Faktor gewonnen, der den entsprechenden Kennfeldwert zwar richtig anpaßt, aber alle anderen Kennfeldwerte im gleichen Sinn verändert. Wie anhand des gewählten Sollwertverlaufes ersichtlich ist, läßt sich mit einer derartigen multiplikativen Anpassung der gewünschte Sollwertverlauf des Kennfeldes nicht exakt erreichen. Für eine Mischform aus beiden Verfahren, wie sie anhand von Figur 7b schematisch dargestellt ist, gibt es verschiedene Möglichkeiten der Anpassung. Eine Möglichkeit besteht darin, das Kennfeld in Stützstellen zu unterteilen. Zwischenwerte werden im einfachsten Fall beispielsweise durch eine lineare Interpolation berechnet. Bei einer Anpassung des Kennfeldes an den entsprechenden Sollwert werden nur die Stützstellen verändert, so daß sich eine Anpassung der umliegenden Bereiche durch die Interpolation ergibt. Hierbei wird automatisch die Umgebung des geänderten Stützstellenwertes im gleichen Sinne wie die Stützstelle an sich, allerdings mit wachsendem Abstand von der Stützstelle schwächer gewichtet, geändert. Bei diesem

Kennfeldlernverfahren ist es nicht erforderlich, jede einzelne Kennfeldgröße anzufahren, um sie zu ändern. Das heißt, daß einerseits eine Anpassung des Kennfeldes rasch vonstatten geht und daß zum anderen auch jede vorgegebene Struktur zumindest näherungsweise anpaßbar ist.

Bezugnehmend auf Figur 5 soll noch ein weiteres, leicht modifiziertes Lernverfahren kurz erläutern werden. Das Kennfeld 20 für die Einspritzzeit wird durch die Eingangsgrößen Drehzahl n und Drosselklappenstellung ∝ als Lastinformation angesteuert. Mit einer Lambda-Regelung soll das Gemisch auf einen vorgegebenen Lambda-Wert eingestellt werden. Hierzu bestimmt ein Regler mit beispielsweise I-Verhalten einen Faktor, mit dem die Ein-spritzzeit multipliziert wird. In Figur 5 kann dieser Regler mit Block 31 identifiziert werden. Dieser Multiplikationsfaktor wirkt ständig, wobei der Regler so abgestimmt ist, daß die Regelzeitkonstante möglichst klein ist. In Abhängigkeit von diesem Faktor wird das Kennfeld beeinflußt. Durch die systembedingten Laufzeiten ist der Regelfaktor auch im stationären Betrieb nicht immer konstant, sondern weist zeitliche Schwankungen auf. Aus diesem Grund ist eine Mittlung des Regelfaktors angebracht, wobei dann nur zu vorgegebenen Zeitpunkten diese gemittelten Regelfaktoren in das Kennfeld eingearbeitet werden. Nach der Einarbeitung wird der Regelfaktor auf eins zurückgesetzt. Diese Maßnahme hat den Vorteil, daß das Kennfeld sicher angepaßt werden kann, obwohl sich die Zeitdauer der Anpassung verlängern kann.

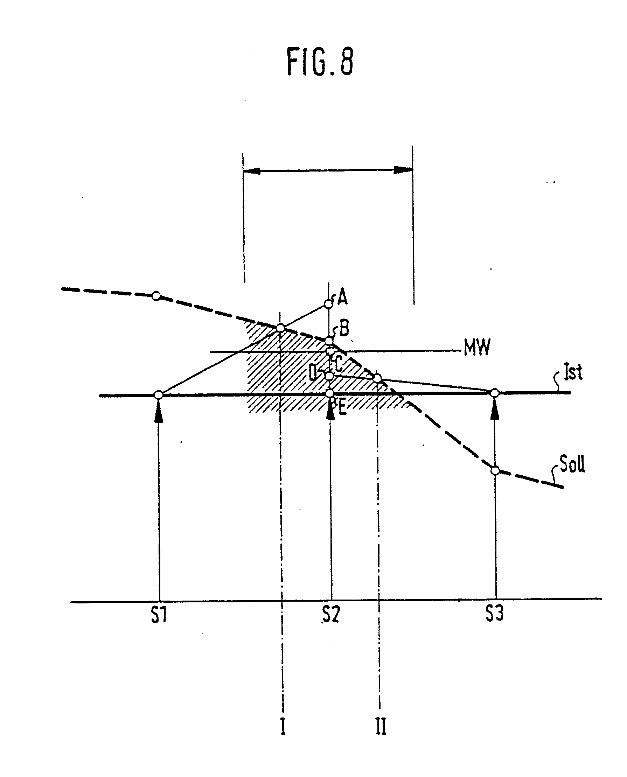

Zur Erläuterung der Vorteile einer derartigen Mittelwertbildung soll die Figur 8 herangezogen werden. Aus Gründen der Einfachheit wurden hier nur drei Stützstellenwerte S1, S2, S3 aufgetragen, die dazu noch gleiche Werte annehmen. Die dick durchgezogene Istwert-Kennlinie nimmt daher den Verlauf einer Geraden an. Die gestrichelt eingezeichnete Sollwert-Kennlinie weicht im vorliegenden Beispiel erheblich von dem Verlauf der Istwert-Kennlinie ab. Um jede der Stützstellen ist ein Stützstellen-Einzugsbereich definiert, der im vorliegenden Spezialfall dem halben Abstand zweier Stützstellen, wie für die Stützstelle S2 in der Zeichnung angedeutet, entspricht. Jede Stützstelle kann nur verändert werden, wenn ein oder mehrere Arbeitspunkte im Einzugsbereich dieser Stützstelle angesteuert werden. Ist nun beispielsweise für längere Zeit der Arbeitspunkt I angesteuert, so ist in diesem Arbeitspunkt nur dann Übereinstimmung zwischen Soll- und Istwert (unter Voraussetzung einer linearen Interpolation) zu erreichen, wenn der Stützstellenwert S2 von seinem Ausgangswert E auf den neuen Wert A angehoben wird. Geht man dagegen von dem Arbeitspunkt II aus, so muß der Stützstellenwert S2 auf den Wert D angehoben werden, damit für den Arbeitspunkt II Übereinstimmung zwischen Soll- und Istwert erreicht wird. In beiden Fällen hat die Stützstelle nicht ihren richtigen Wert angenommen, der bei B liegen sollte. Aus dieser anschaulichen Darstellung ergibt sich zum einen, daß die Anpassung umso besser ist, je näher der Arbeitspunkt an der Stützstelle liegt, und zum anderen, daß mit einem einzigen Arbeitspunkt im Einzugsbereich der jeweiligen Stützstelle diese nicht immer exakt angepaßt werden kann.

Es bietet sich jedoch die Möglichkeit an, die Stütz-stelle nicht sofort zu beeinflussen, sondern die Korrekturwerte zu mitteln, solange sich der Arbeitspunkt im Einzugsbereich befindet. Beim Verlassen des Bereiches wird die Stützstelle mit diesem Mittelwert korrigiert. Im vorliegenden Beispiel würde sich nach dieser Vorgehensweise für die Stützstelle S2 der Punkt C ergeben. Obwohl dieser Wert auch nicht exakt dem Sollwert B entspricht, liegt er jedoch schon recht nahe am Sollwertpunkt. Werden noch weitere Arbeitspunkte innerhalb des Einzugsbereichs der jeweiligen Stützstelle angefahren, so ergibt sich über die fortgesetzte Mittlung der berechneten Werte eine kontinuierliche Annäherung des Stützstellenistwertes an den Stützstellensollwert.

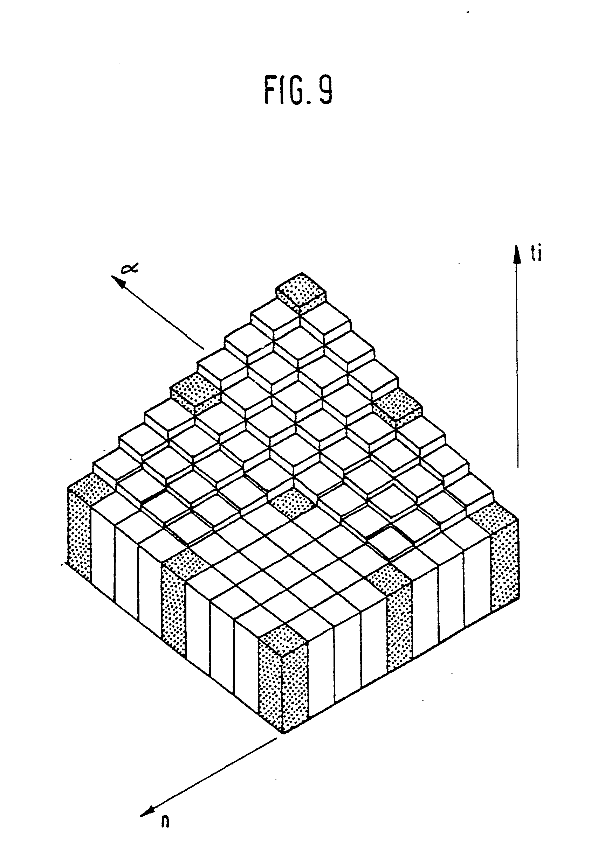

In Figur 9 ist ein Ausschnitt aus einem beliebigen Kennfeld dargestellt. Die Eingangsgrößen, im vorliegenden Fall die Drehzahl n und die Drosselklappenstellung ∝ sind quantisiert und jeder Kombination dieser Eingangsgrößen ist eine Ausgangsgröße, hier die Einspritzzeit $t_i$ zugeordnet. In der hardwaremäßigen Ausführung sind die Ausgangsgrößen in einem Schreib-Lese-Speicher abgelegt, wobei die Eingangsgrößen jeweils die Adresse innerhalb des Speichers bestimmen. Im vorliegenden Fall wurde als einfaches Beispiel ein Kennfeld mit 3x3 Stützstellen gewählt, die in der Figur punktiert gekennzeichnet sind. Durch eine lineare Interpolation können jeweils zwischen zwei Stützstellen noch drei Zwischenwerte berechnet werden, so daß sich insgesamt für den hier gewählten Spezialfall 81 Kennfeldwerte ergeben.

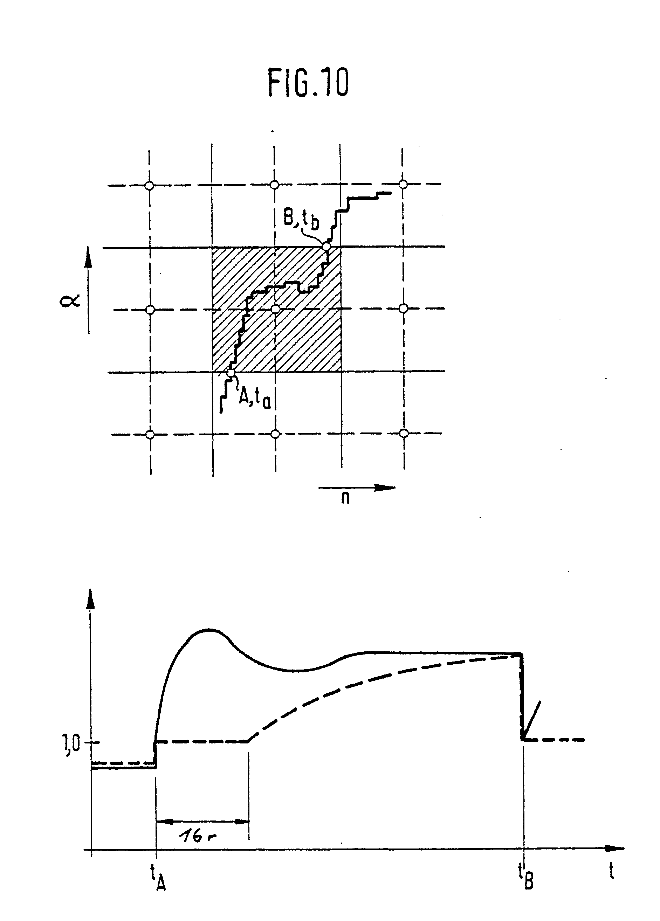

Anhand von Figur 10 soll die vorher beschriebene Mittelwertbildung der Korrekturwerte innerhalb eines Stützstellenbereiches verdeutlicht werden. Im oberen Teil dieser Abbildung sind ausschnittsweise neun Stützstellen (3x3) dargestellt, wobei der Einzugsbereich einer Stützstelle schraffiert dargestellt wurde. Die Fahrkurve, die durch die zeitliche Änderung der Eingangsgrößen des Kennfeldes, hier Drosselklappenstellung ∝ und Drehzahl n gegeben ist, ist als durchgezogene Linie dargestellt. Diese Fahrkurve tritt am Punkt A zum Zeitpunkt $t_a$ in den Einzugsbereich der ausgewählten Stützstelle ein und verläßt nach einem gewissen Zeitraum diesen Stützstellenbereich am Punkt B zum Zeitpunkt $t_b$.

Aus dem unteren Teil der Figur 10 ist der deutliche Verlauf des Regelfaktors (durchgezogene Linie) im Zeitraum zwischen $t_a$ und $t_b$ sowie der zeitlich gemittelte Regelfaktor (gestrichelte Linie) ersichtlich. Das

Mittlungs verfahren läuft nun in folgender Weise ab. Wenn die Fahrkurve vom Einzugsbereich einer Stützstelle in einen anderen Einzugsbereich wechselt (zum Zeitpunkt $t_a$, $t_b$), so erfolgt gegebenenfalls eine Anpassung der Stützstelle des gerade verlassenen Einzugsbereiches sowie eine Rücksetzung des Regelfaktors auf den neutralen Wert eins. In dem Zeitpunkt, in dem die Fahrkurve im Einzugsbereich einer Stützstelle liegt, erfolgt eine Mittelung des Regelfaktors. Es kann sich dabei als vorteilhaft erweisen, daß die Mittelwertbildung erst nach einer bestimmten Anzahl von Umdrehungen der Brennkraftmaschine (beispielsweise 16 Umdrehungen) einsetzt. Dadurch können einerseits Überschwinger ausgeklammert werden und andererseits ist eine Unterscheidung zwischen dynamischem und stationärem Fahrbetrieb der Brennkraftmaschine möglich. Zur Mittlung wird ein insbesondere digitaler Tiefpaß erster Ordnung verwendet. Verläßt die Fahrkurve den betreffenden Einzugsbereich, so wird dieser gemittelte Wert ganz oder möglicherweise auch nur teilweise in die Stützstelle eingearbeitet und anschließend der Regelfaktor auf den neutralen Wert eins gesetzt.

Charakteristisch für dieses Lernverfahren ist die Tatsache, daß die Eigenschaften des bestehenden Regelkreises unverändert erhalten bleiben. Innerhalb einer Stützstellenumgebung beeinflußt der Regelfaktor weiterhin direkt die Stellgröße. Erst nachdem durch die Mittelung mehrere Korrekturwerte innerhalb eines Stützstellenbereiches eine eindeutige Änderungstendenz erfaßt wurde, wird beim Verlassen dieses Stützstellenbereiches die Änderung in die zugehörige Stützstelle eingearbeitet. Durch das Interpolationsverfahren ergibt sich in der Stellgröße ein Sprung, der sich jedoch nicht störend auswirkt. Es kann sich als sinnvoll erweisen, durch ein Rechenverfahren den Regelfaktor in der Weise zurückzusetzen, daß ein Sprung vermieden wird.

Eine Änderungsbegrenzung, die als Referenz den Urzustand des Kennfeldes verwendet, gewährleistet, daß auch bei einer Störung immer ein "lauffähiges" Kennfeld erhalten bleibt. Gleichzeitig kann bei Ansprechen der Begrenzung eine Warnung ausgegeben werden, da mit großer Wahrscheinlichkeit ein schwerwiegender Defekt innerhalb des Regelkreises oder am Motor vorliegt. Das Kennfeld im Urzustand ermöglicht weiterhin eine komfortable Notlauffunktion.

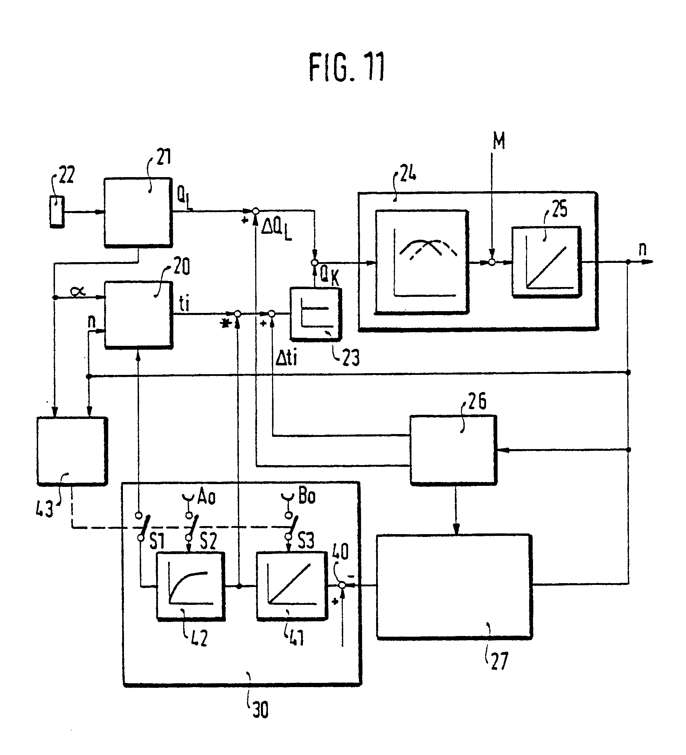

In Figur 11 , die in Bezug auf die Vorsteuerung der Gemischzusammensetzung identisch mit den Anlagen der Figur 2 und 5 ist, wurde blockschaltbildmäßig eine Ausführungsform des Kennfeldlernverfahrens mit Mittelwertbildung dargestellt. Obwohl in diesem Fall die der Vorsteuerung überlagerte Regelung als Extremwertregelung ausgelegt ist, bleibt das Prinzip des hier vorgestellten Kennfeldlernverfahrens davon unberührt. Genauso wäre es möglich, anstelle einer Extremwertregelung beispielsweise die in Figur 5 vorgestellte Lambda-Regelung ( ($\lambda = 1$)-Regelung, Magerregelung oder ähnliches) zu verwenden. Auf jeden Fall werden die Ausgangssignale der wie immer gearteten Meßeinrichtung 27 dem Regler 30 zugeführt. Über einen Vergleicher 40, in dem der Ist-Sollwert-Vergleich durchgeführt wird, findet die Ansteuerung einer im vorliegenden Ausführungsbeispiel vorzugsweise als Integrator ausgebildeten Komponente 41 statt. Die Ausgangssignale dieser Komponente 41 beeinflussen zum einen multiplikativ die Ausgangsgröße $t_i$ des Kennfeldes 20. Zum anderen dienen sie zur Ansteuerung eines Mittelwertbilders 42, der seinerseits ausgangsseitig die einzelnen Kennfeld- bzw. Stützstellenwerte des Kennfeldes 20 beeinflußt. Die Verbindung zwischen dem Mittelwertbilder 42 und dem Kennfeld 20 ist über einen Schalter S1 unterbrechbar. Des weiteren können die beiden Blöcke Mittelwertbilder 42 sowie die vorzugsweise als Integrator ausgebildete Komponente 41 über weitere Schalter S2 und S3 auf vorgegebene Anfangswerte $A_0$ und $B_0$ gesetzt werden. Die Schalter S1, S2 und S3 werden durch eine Bereichserkennung 43, der als Eingangsgrößen die Drosselklappenstellung $\propto$ und die Drehzahl n der Brennkraftmaschine zugeführt werden, gesteuert.

Es soll an dieser Stelle noch einmal hervorgehoben werden, daß die Parameter Drosselklappenstellung $\propto$ und Drehzahl n zur Charakterisierung des Betriebszustandes der Brennkraftmaschine beispielhaften Charakter haben. Ebenso wären auch andere Parameter, wie z.B. der Ansaugrohrdruck, die Luftmenge, die Luftmasse oder auch die Abgastemperatur als Eingangsgrößen denkbar.

Zu jeder Stützstelle wird, wie schon im Text zu Figur 10 beschrieben, ein Einzugsbereich definiert. Solange die Fahrkurve der Brennkraftmaschine innerhalb eines Einzugsbereiches liegt, wird im Mittelwertbilder 42, eventuell nach einer bespielsweise drehzahlabhängigen Verzögerungszeit, der Korrekturfaktor gemittelt, das Kennfeld jedoch nicht beeinflußt. Der aus dem Kennfeld 20 ausgegebene Wert wird permanent durch das Ausgangssignal des Reglers 30 beeinflußt.

Verläßt die Fahrkurve den betreffenden Einzugsbereich der Stützstelle, so stellt die Bereichserkennung dies fest und betätigt die drei Schalter S1, S2 und S3. Mittels des Schalters S1 kann der gemittelte Korrekturwert in die zuletzt angesteuerte Stützstelle eingearbeitet werden. Daneben werden über die Schalter S2 und S3 der Mittelwertbilder 42 und die Komponente 41 auf Anfangswerte, nämlich $A_0$ und $B_0$ zurückgesetzt. In gleicher Weise kann dieser Lernvorgang für die nächste, angefahrene Stützstelle durchgeführt werden.

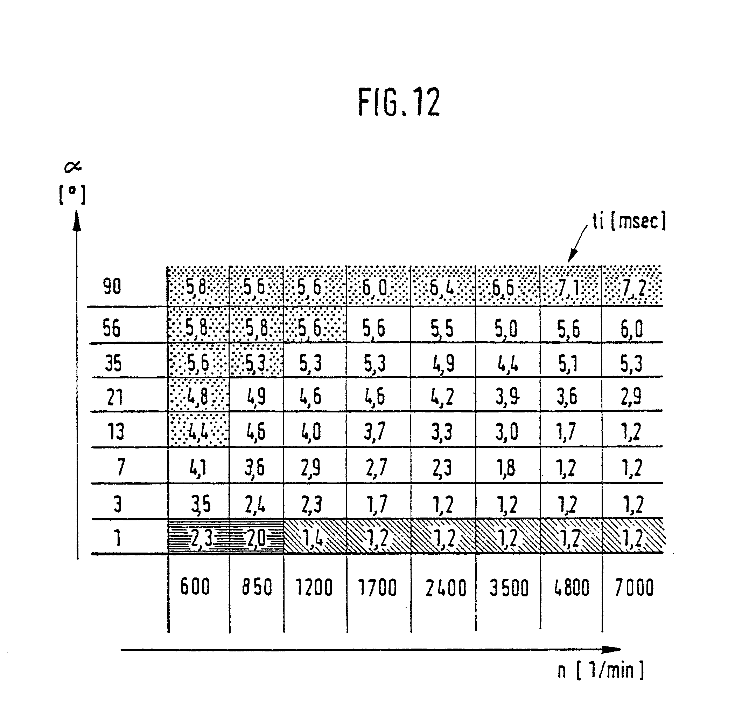

Ergänzend ist in Figur 12 ein Kennfeld für die Einspritzzeiten $t_i$ (in Millisekunden) aufgetragen, wobei als

Eingangsgrößen wiederum die Drosselklappenstellung ∝ (in Grad) und die Drehzahl der Brennkraftmaschine (in Umdrehungen pro Minute) dienen. Das Kennfeld besteht hier aus 8x8 Stützstellen, nämlich acht Drehzahl und acht Drosselklappenstellungen. Die 64 Werte für die Ausgangsgröße $t_i$ sind beispielsweise in einem Schreib-Lese-Speicher abgelegt und können mit den schon weiter oben beschriebenen Regelverfahren ($be_{min}$-, $P_{max}$-Regelung) in den entsprechenden, durch verschiedene Schraffierungen gekennzeichneten Bereichen geändert werden. Für kleine Drosselklappenwinkel und Drehzahlen unter ca. 1.000 Umdrehungen pro Minute wird die Drehzahl mittels einer Leerlaufregelung mit überlagerter $be_{min}$-Regelung geregelt. Für höhere Drehzahlen der Brennkraftmaschinen bei nahezu geschlossener Drosselklappe findet eine Schubabschaltung der Brennkraftmaschine statt. Über einen weiten, unschraffierten Bereich, den Teillastbereich bietet sich eine $be_{min}$-Regelung der Gemischzufuhr für die Brennkraftmaschine an. Insbesondere bei vollgeöffneter Drosselklappe bzw. nahezu vollgeöffneter Drosselklappe und niedrigen Drehzahlen der Brennkraftmaschinen ist hingegen eine Regelung auf maximale Leistung, eine $P_{max}$-Regelung sinnvoll. Diese verschiedenen Regelverfahren lassen sich beispielsweise mit einer Anordnung, wie sie schematisch in Figur 2 dargestellt ist, durchführen.

Des weiteren sind verschiedene Anreicherungsfunktionen, so z.B. die Warmlauf- oder Beschleunigungsanreicherung vorgesehen. Bei der Warmlaufanreicherung wird das Gemisch über eine temperaturabhängige Warmlaufkennlinie angefettet, wobei das Kennfeld selbst unbeeinflußt bleibt. Bei der Beschleunigungsanreicherung muß dagegen eine vorübergehende Veränderung der Benetzung der Saugrohrwand ausgeglichen werden. Die daraus kurzzeitig resultierende Fehlanpassung läßt sich dadurch korrigieren, daß die Kraftstoffmenge um einen Faktor überhöht wird, der der zeitlichen Änderung der Stellung der Drosselklappe entspricht. Dadurch, daß die Drosselklappenstellung als Eingangsgröße für die Beschleunigungsanreicherung verwendet wird, sprichtdiese Anreicherung sehr schnell an.

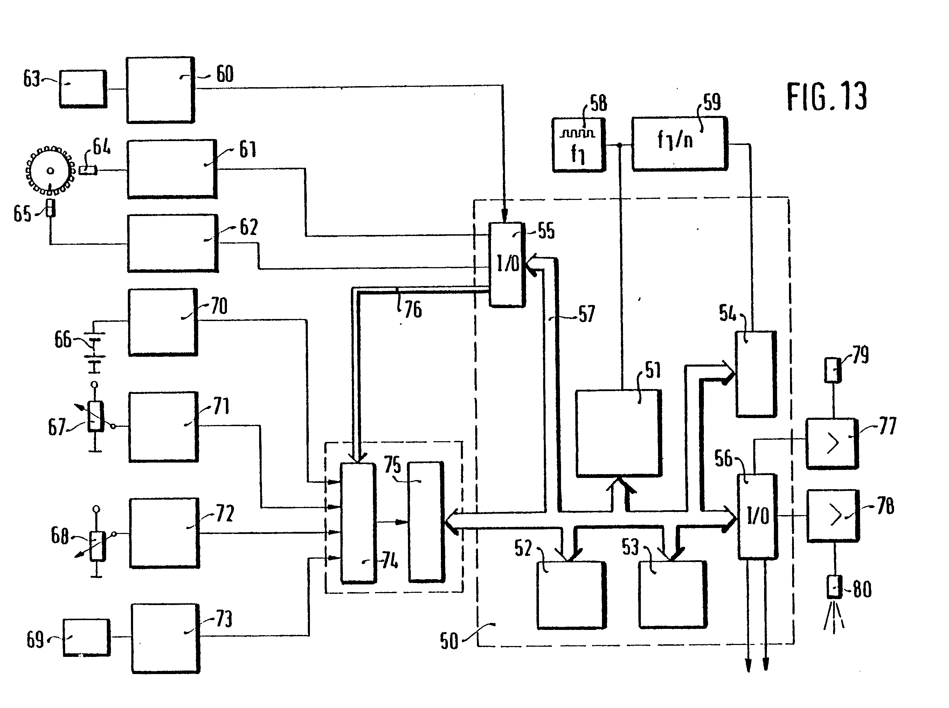

Der hardwaremäßige Schaltungsaufbau zur Durchführung einer ∝ -n-Gemischvorsteuerung mit einer überlagerten, adaptiven Regelung mittels eines Mikrocomputers (beispielsweise INTEL 8051) und der dazugehörigen Peripherie ist schematisch in Figur 13 dargestellt. In einem Mikrocomputer 50 sind die Komponeten CPU 51 , ROM 52, RAM 53, Timer 54, erste Ein/Ausgabe-Einheit 55 und zweite Ein/Ausgabe-Einheit 56 über einen Adress- und einen Datenbus 57 miteinander verbunden. Zur Zeitsteuerung des Programmablaufes im Mikrocomputer 50 dient ein Oszillator 58, der einerseits direkt an die CPU 51 und andererseits über einen Teiler 59 an den Timer 54 angeschlossen ist. Der ersten Ein/Ausgabe-Einheit 55 werden über Aufbereitungsschaltungen 60, 61 und 62 die Signale einer Abgassonde 63 eines Drehzahlgebers 64 sowie eines Bezugsmarkengebers 65 zugeführt. Als weitere Eingangsgrößen dienen die Batteriespannung 66, die Drosselklappenstellung 67, die Kühlwassertemperatur 68 sowie das Ausgangssignal eines Drehmomentgebers 69, die über zugeordnete Aufbereitungsschaltungen 70, 71, 72 und 73 einer Serienschaltung aus einem Multiplexer 74 und einem Analog-Digital-Wandler 75 zugeführt werden. Die Ausgänge des Analog-Digital-Wandlers 75 sind mit dem Bus 57 verbunden. Die Funktion des Multiplexers 74 und des Analog-Digital-Umsetzers 75 kann beispielsweise durch den Baustein 0809 von National Semiconducters realisiert werden. Die Steuerung des Multiplexers 74 erfolgt über eine Leitung 76 ausgehend von der ersten Ein/Ausgabe-Einheit 55. Die zweite Ein/Ausgabe-Einheit 56 steuert über Leistungsendstufen 77 sowie 78 einen Luftbypaß 79 und Einspritzventile 80 an. Weitere Ausgangssignale dieser Ein/Ausgabe-Einheit 56 können für Diagnosezwecke oder die Zündungssteuerung bzw. -regelung verwendet werden.

Nicht alle hier dargestellten Eingangs- bzw. Ausgangsgrößen sind für jedes der bisher beschriebenen Regelverfahren unbedingt notwendig. Für eine Extremwertregelung auf minimalen KraftstoffverBrauch bzw. maximale Leistung durch Wobbeln des Luftbypasses 79 bzw. der Kraftstoffmenge (Einspritzventile 80) kann die Abgassonde 63, die Aufbereitungsschaltung 60, der Drehmomentgeber 69 sowie die Aufbereitungsschaltung 73 entfallen. Wird statt dieser Extremwertregelung eine Regelung der Luftzahl Lambda durchgeführt, so kann auf den Drehmomentgeber 69, die Aufbereitungsschaltung 73, die Endstufe 77 und den Luftbypaß 79 verzichtet werden. Der Drehmomentgeber 69 einschließlich der Aufbereitungsschaltung 73 ist für ein modifiziertes, noch zu beschreibendes Regelverfahren notwendig.

Anhand des folgenden Flußdiagrammes wird der Programmablauf für das Beispiel einer Extremwertregelung gemäß Figur 2 näher erläutert. (Die anderen, schon beschriebenen bzw. noch zu beschreibenden Regelverfahren lassen sich mit geänderten Eingangsgrößen und Änderungen der Programmstruktur, die für den einschlägigen Fachmann keine Schwierigkeiten darstellen, auf einfache Weise realisieren):

Flußdiagramm 1: Hauptprogramm

INITIALISIERUNG BEI ZÜNDUNG EIN:
PORTS DEFINIEREN
INTERRUPTS DEFINIEREN
TIMER-MODUS EINSTELLEN
SPEICHER MIT ANFANGSWERTEN LADEN
ZEITSYSTEM STARTEN

WARTEN AUF BEZUGSMARKE (DREHZAHLSIGNAL)

KRAFTSTOFFPUMPE EINSCHALTEN

DREHZAHL-INTERRUPT? (DURCH ZÜNDUNG, BEZUGSMARKE ODER ENDE DREHZAHLMESSUNG)

NEIN

JA

UNTERPROGRAMM: DREHZAHLABHÄNGIGE PROGRAMMTEILE (Flußdiagramm 2)

ZEIT-INTERRUPT? (DURCH TIMER ALLE 0.1 ms)

NEIN

JA

UNTERPROGRAMM: ZEITABHÄNGIGE PROGRAMMTEILE (Flußdiagramm 3)

Flußdiagramm 2: Unterprogramm für drehzahlabhängige Programmteile

DREHZAHLSYNCHRONE INTERRUPTS
ZÜNDZEITPUNKT
JA
NEIN
PERIODENDAUERMESSUNG ZU ENDE? (ERGEBNIS: TN)
RETURN
START DER PERIODENDAUERMESSUNG EINES WINKELSEGMENTS
RETURN
JA
DREHZAHLBERECHNUNG N = K/TN
DREHZAHLSYNCHRONE UNTERPROGRAMME FÜR P max -REGELUNG
TESTSIGNALGENERATOR
(Flußdiagramm 4)
BANDPASS
(Flußdiagramm 5)
AUSWERTUNG NACH BETRAG UND PHASE
(Flußdiagramm 6)
LAG EINE BEZUGSMARKE ZWISCHEN DEN LETZTEN BEIDEN ZÜNDUNGEN?
NEIN
JA
AUSGABE DES EINSPRITZIMPULSES
RETURN
(Flußdiagramm 7)
BERECHNUNG DER EINSPRITZZEIT
(Flußdiagramm 8)
LERNSTRATEGIE
RETURN

Flußdiagramm 3: Unterprogramm für zeitabhängige Programmteile

INTERRUPT VON ZEITZÄHLER
(ALLE 0.1 ms)
UNTERPROGRAMM:
BYPASSANSTEUERUNG
10 ms PERIODENDAUER MIT
VARIABLEM TASTVERHÄLTNIS
10 ms ABGELAUFEN?
NEIN
JA
RETURN
ZEITSYNCHRONE
UNTERPROGRAMME
FÜR $\dot{be}_{min}$ -
REGELUNG
TESTSIGNALGENERATOR
(Flußdiagramm 4)
BANDPASS
(Flußdiagramm 5)
AUSWERTUNG NACH BETRAG
UND PHASE
(Flußdiagramm 6)
ABREGELFUNKTIONEN
IM 10 ms-RASTER
(START, NACHSTARTANREI-
CHERUNG, BESCHLEUNIGUNGS-
ANREICHERUNG)
RETURN

Flußdiagramm 4: Testsignalgenerator

$P_{max}$-Regelung
1 X pro Zünd.
1 X pro 10ms
$be_{min}$-Regelung
NEIN
DROSSELKLAPPE < 25°?
JA
DROSSELKLAPPE > 35°?
NEIN
JA
$t_i$-WOBBELUNG:
$f_{WOB}$ = n-proportional
$f_{WOB}$ = 6.25 Hz (bei 1500 U/min)
[2 UMDR. "FETT" - 2 UMDR. "MAGER"]
WOBBELAMPLITUDE:
$\Delta\lambda < \pm$ 0.05
BYPASS-WOBBELUNG:
$f_{WOB}$ = const.
$f_{WOB}$ = 3 Hz.
WOBBELAMPLITUDE:
$\Delta\lambda < \pm$ 0.05
(KENNFELD = f ($\alpha_{DK}$, n)
(für WOBBELAMPLITUDE)
$P_{max}$-REGELUNG
$be_{min}$-REGELUNG
RETURN

Flußdiagramm 5: Bandpass

$P_{max}$-REGELUNG
1 X pro Zünd.
1 X pro 10ms
$be_{min}$-REGELUNG
ABTASTINTERVALL:
$P_{max}$-REGELUNG:
8 ABTASTUNGEN PRO TESTSIGNALPERIODE
$be_{min}$-REGELUNG:
32 ABTASTUNGEN PRO TESTSIGNALPERIODE
FILTERALGORITHMUS:
$BNF = -a_1 . BNF1 - a_2 . BNF2 + b_1 . BN1 - b_2 . BN2$
MIT BNF = NEUER FILTERWERT (16 BIT)
BNF1, BNF2= VERGANGENHEITSWERTE DES FILTERWERTS (24 BIT)
BN1, BN2 = VERGANGENHEITSWERTE DER DREHZAHL (16 BIT)
PHASE UND AMPLITUDE (POS. SPITZENWERT) ABSPEICHERN
RETURN

Flußdiagramm 6: Auswertung nach Betrag und Phase

1 X pro
TESTSIGNAL-
PERIODE
BESCHLEUNIGUNG
ODER SCHUB?
JA
RETURN
NEIN
LEERLAUF?
JA
$be_{min}$-REGELUNG FÜR
LEERLAUF-
GEMISCH
NEIN
DROSSELKLAPPEN-
WINKEL < 25°?
NEIN
JA
DK-WINKEL > 35°?
NEIN
JA
PHASENLAGE
BANDPASS
$\lambda \gtrless \lambda_{P_{max}}$
PHASENLAGE
BANDPASS
$\lambda \gtrless \lambda_{be_{min}}$
<
>
>
<
GEMISCH
ABMAGERN
GEMISCH
ANFETTEN
GEMISCH
ANFETTEN
GEMISCH
ABMAGERN
$P_{max}$-REGELUNG MIT
KRAFTSTOFFWOBBELUNG ($t_i$)
RETURN
$be_{min}$-REGELUNG MIT
LUFTWOBBELUNG (BYPASS)

Flußdiagramm 7: Berechnung der Einspritzzeit

1 X PRO KW-UMDREHUNG
ERFASSUNG DER ANALOGEN EINGANGSGROESSEN (DROSSELKLAPPENSTELLUNG, TEMPERATUR-BATTERIESPANNUNG usw.)
START?
JA
NEIN
LEERLAUF?
JA
NEIN
LEERLAUF-KENNFELD
4 X 8
t_e = f (τ, n)
EINSPRITZ-KENNFELD
8 X 8
t_e = f (α_DK, n)
EINSPRITZ-MENGE
t_e = const.
SCHUB?
JA
NEIN
ABSCHALT-VERZÖGERUNG
t_e = 0
BERÜCKSICHTIGUNG VON KORREKTUR-FAKTOREN (WARMLAUF, BESCHLEUNIGUNGSANREICHERUNG, REGELFAKTOR, SPANNUNGSKORREKTUR)
t_i = t_e · ΣF_KORR + t_v
RETURN

Flußdiagramm 8: Kennfeldlernstrategie

ADRESS-BERECHNUNG DER ZU VERÄNDERNDEN STÜTZSTELLE → N
STÜTZSTELLENBEREICH VERLASSEN? N ≠ A ?
NEIN
JA
BERECHNUNG DES STÜTZ-STELLENWERTES (AUS GEMITT. REGELFAKTOR) UND KENNFELDANPASSUNG
MITTELUNG DES REGELFAKTORS
REGELFAKTOR ZURÜCKSETZEN
RETURN

Nach dieser blockschaltbildmäßigen Darstellung des Programmablaufes für eine Extremwertregelung sollen einige Weiterentwicklungen bzw. Verbesserungen und Vereinfachungen der bisher dargestellten Regelverfahren diskutiert werden.

Wie schon in der Beschreibung anhand der Figuren 1 und 2 dargestellt wurde, erfordert die Extrem-

wertregelung auf das Verbrauchsminimum $be_{min}$ ein Wobbeln der Luft beispielsweise über einen Luftbypaß, der die Drosselklappe überbrückt. Zum Durchlaufen der relativ langen Strecke zwischen dem Bypaß und den einzelnen Zylindern benötigt das Luftgemisch eine gewisse Zeitdauer, wobei aufgrund dieser Laufzeiten die Frequenz des Luftwobbelns begrenzt und damit die Regelung relativ langsam wird. Im Gegensatz hierzu kann das Wobbeln der Kraftstoffmenge mit relativ hoher Frequenz erfolgen, da die Einspritzventile direkt am Brennraum angeordnet und Laufzeiteffekte dadurch zu vernachlässigen sind. Im weiteren sollen nun verschiedene Verfahren offenbart werden, bei denen eine Regelung auf Verbrauchsminimum mit Hilfe der Kraftstoffwobbelung als Testsignal realisiert werden kann. Ein zusätzlicher Vorteil dieser Methode ergibt sich aus dem Wegfall des Luftbypasses.

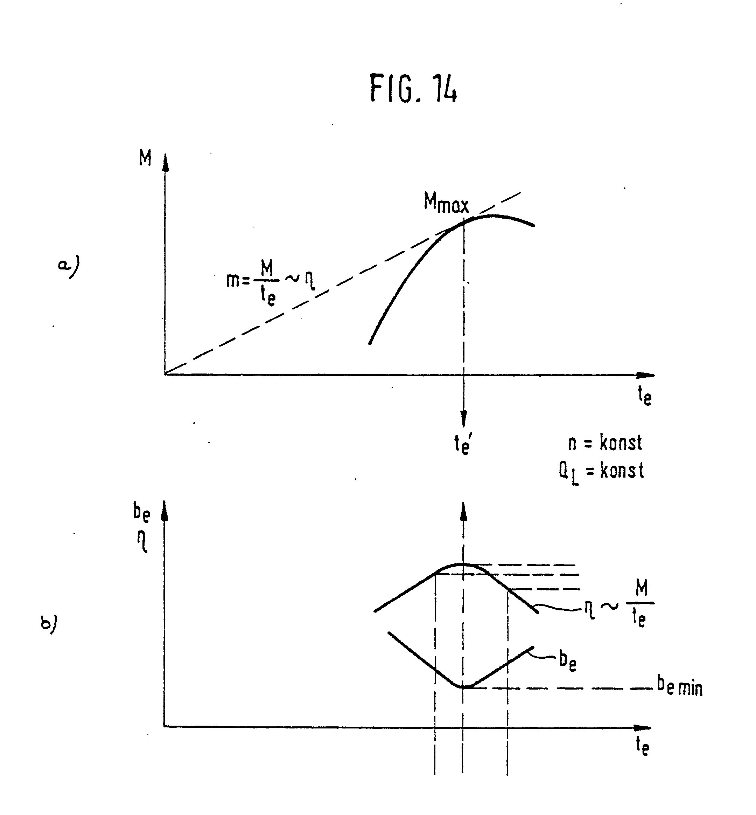

Zur Erläuterung des Grundgedankens zeigt Figur 14 zum einen in Figur 14a das Drehmoment M einer Brennkraftmaschine aufgetragen über der unkorrigierten Einspritzzeit $t_e$ und Figur 14b zum anderen den Wirkungsgrad $\eta$ bzw. den spezifischen Kraftstoffverbrauch aufgetragen über der unkorrigierten Einspritzzeit $t_e$. Der in Figur 14a dargestellte Verlauf des Drehmoments bei konstanter Luftmenge und Drehzahl läßt sich aus den durchgezogenen Linien der Figur 1 herleiten, wobei anstelle des Lambda-Wertes des Gemisches die Einspritzzeit als Abszisse dient. Da der Quotient aus Drehmoment M und Einspritzzeit $t_e$ dem Wirkungsgrad entspricht, gibt die eingezeichnete Tangente m das Maximum des Wirkungsgrades bzw. das Minimum des spezifischen Kraftstoffverbrauchs an. In Figur 14b sind die entsprechenden Kurven für Wirkungsgrad und spezifischen Kraftstoffverbrauch dargestellt.

Es bietet sich nun an, die Einspritzzeit $t_e$ zu wobbeln und mit Hilfe eines Drehmomentgebers, wie er in Figur 13 mit der Nummer 69 dargestellt ist, das jeweilige Drehmoment und daraus den Wirkungsgrad $\eta \sim$ M/te der Brennkraftmaschine zu bestimmen. Wird dieser Wert beispielsweise mit einem digitalen Bandpaß gefiltert, und mit dem Testsignal verglichen, so kann aus der Phasenlage des Testsignals und des Signals am Ausgang des Bandpasses bestimmt werden (siehe auch Beschreibung zur Figur 2, 3, 4), ob die Grundanpassung sich rechts oder links vom Maximum befindet. Über einen Regler sind dann entsprechende, korrigierende Eingriffe möglich. Da ein Wobbeln der Einspritzzeit im Maximum des Wirkungsgrades Drehmomentänderungen hervorruft, muß der Wobbelhub im praktischen Fahrbetrieb klein gehalten werden. Zu beachten ist, daß die Drehmomentmessung als Absolutmessung eingeht. Eine Verschiebung beispielsweise des Nullpunktes durch Offset-Spannungen bedeutet sofort eine Verschiebung des errechneten Maximums. Vorteilhaft erweist sich, daß für dieses Regelverfahren der Luftbypaß zum Wobbeln der angesaugten Luftmenge entfallen kann. Grundsätzlich läßt sich dieses Prinzip des Wobbelns der Einspritzzeit auch für andere Gemischzumeßsysteme, die ihre Eingangsgrößen nicht unbedingt von der Drehzahl und Drosselklappenstellung ableiten, einsetzen.

Im folgenden wird ein weiteres Verfahren zur Regelung auf das Verbrauchsminimum beschrieben, bei dem als Testsignal die Kraftstoffmenge gewobbelt, jedoch kein Drehmomentgeber benötigt wird. Es ist nämlich möglich, wie die folgende Gleichung zeigt, daß das Drehmoment sich auch aus der Drehzahländerung bestimmen läßt:

$$M - W = \Delta M = -2\pi \cdot \Theta \frac{\Delta T}{T^3}$$

mit M = Drehmoment
W = Lastmoment
$\Delta$ M = Mittelwert der Momentänderung über eine Umdrehung
$\Theta$ = Trägheitsmoment
T = Periodendauer einer Umdrehung
$\Delta$T = Änderung der Periodendauer .

Bildet man nun den Quotienten $\Delta$ M/$\Delta t_e$, so läßt sich die Steigung der Drehmomentkurve gemäß Figur 14a bestimmten. Hat man auf der anderen Seite die Steigung für den $be_{min}$-Punkt in den einzelnen Betriebspunkten der Brennkraftmaschine vermessen und beispielseise als Sollwert in einem Speicher abgelegt, so kann über einem Soll-Ist-wert-Vergleich eine Regelung aufgebaut werden. Es ist mit diesem Verfahren jedoch auch möglich, durch Vorgabe von anderen Sollwerten auf Betriebspunkte zu regeln, die nicht dem $be_{min}$-Wert entsprechen.

Wie aus der Gleichung ersichtlich ist, geht das Trägheitsmoment $\Theta$ in die Berechnung der Steigung ein. Dieses ändert sich jedoch in Abhängigkeit vom eingelegten Getriebegang und der Beladung der Brennkraftmaschine. Der Ein fluß auf die berechnete Steigung ist bei Fahrzeugen mit Drehmomentwandlern im allgemeinen sehr gering. Bei Fahrzeugen mit Handschaltgetriebe kann der Einfluß nicht immer vernachlässigt werden. Hier bietet sich beispielsweise an, die Sollwerte gangabhängig oder ladungsabhängig vorzugeben. Eine einfache Möglichkeit besteht darin, das Einspritzkennfeld nur in einem Gang, beispielsweise dem höchsten Gang zu bestimmen und für die anderen Getriebegänge als gegeben vorauszusetzen. Obwohl die Gleichung exakt nur unter der Voraussetzung eines konstanten Lastmoments W gilt, kann der aus kleinen Änderungen des Lastmoments resultierende Fehler unter normalen Betriebsbedingungen der Brennkraftmaschine in guter Näherung vernachlässigt werden.

Eine Vereinfachung bzw. eine Verbesserung der beschriebenen Einspritzverfahren mit Kennfeld-Vorsteuerung und einer überlagerten Regelung, wobei verschiedene Regelverfahren in Abhängigkeit von dem Betriebsbereich der Brennkraftmaschine angewendet werden, ergibt sich durch die im folgenden beschriebene Anordnung. Das Kennfeld ist, wie schon in Figur 12 beschrieben, in Abhängigkeit von den Eingangsgrößen wie z.B. der Drosselklappenstellung $\alpha$ und der Drehzahl n in verschiedene Bereiche, nämlich Leerlauf, Schub, Teillast und Vollast unterteilt. Der Ausgestaltung liegt ebenfalls die Absicht zugrunde, ein Wobbeln der Luftmenge für die $be_{min}$-Regelung im Teillastbereich zu vermeiden. Dazu werden die Kennfeldwerte der Vorsteuerung im Vollastbereich so angepaßt, daß der Motor im Leistungsmaximum arbeitet. Die Luftzahl liegt dann ebenso wie für den Leerlaufbereich bei Werten$\lambda \leq$ 1. Im Teillastbereich werden die Kennfeld werte dem Verbrauchsminimum $be_{min}$ angepaßt. Die Luftzahl $\lambda$ variiert hier zwischen Werten 1,1 $\leq \lambda \leq$, 5. Im Schubbetrieb wird die Kraftstoftmenge auf sehr kleine Werte oder auf Null reduziert. Dadurch, daß die Drosselklappenstellung kein direktes Maß für die Luftmenge darstellt, gehen Änderungen von Luftdruck und -temperatur unmittelbar in den Lambda-Wert des der Brennkraftmaschine zugeführten Gemisches ein. Die im Kennfeld abgelegten Vorsteuerwerte für die der Brennkraftmaschine zugeführte Kraftstoffmenge müssen daher durch eine überlagerte Regelung korrigiert werden, so daß der Lambda-Wert entsprechend eingestellt werden kann.

Als besonders einfaches Regelverfahren bietet sich eine Regelung auf maximale Leistung an, die außer im Leerlaufbereich nur im Vollastbereich wirksam ist. Der Regler erzeugt einen Faktor, durch den die Änderungen in der angesaugten Luftmenge aufgrund von Druck- bzw. Temperaturschwankungen berücksichtigt werden. Dieser Faktor, der nur im Vollastbereich ermittelt wird, gilt natürlich näherungsweise auch für die Kennfeldwerte des Teillastbereiches. Es bietet sich aus diesem Grunde an, diesen Faktor beim Übergang in den Teillastbereich festzuhalten und auch in diesem Bereich wirken zu lassen. Insgesamt gesehen beeinflußt dieser Regelfaktor den gesamten Teillast-und Vollastbereich, wird jedoch nur im Vollastbetrieb der Brennkraftmaschine ermittelt.

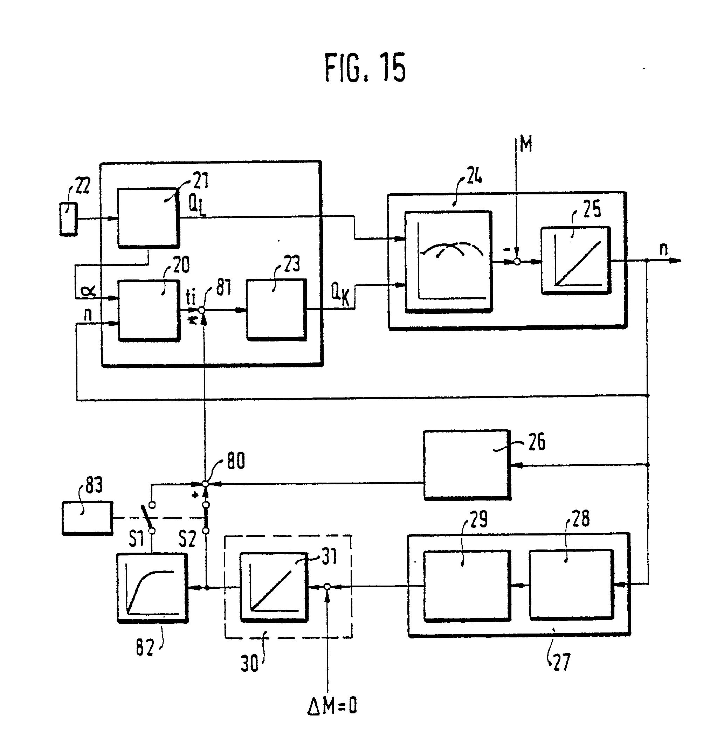

In Figur 15 ist ein Blockschaltbild des Regelkreises dargestellt. Zu Figur 2 und 5 identische Komponenten sind auch mit gleichen Ziffern bezeichnet. Im weiteren wird nur die Abweichung bzw. Neuerung beschrieben. Da es sich im vorliegenden Fall nur um eine Regelung auf Leistungs maximum handelt, wirkt der Testsignalgenerator 26 über eine Summationsstelle 80 und eine Multiplikationsstelle 81 alleine auf die aus dem Kennfeld 20 ausgelesenen Einspritzzeiten $t_i$. Da jeweils zwei Einspritzimpulse im Wechsel angefettet und abgemagert werden, ergibt sich eine drehzahlabhängige Beeinflussung. Der Regler 30, dem die Ausgangssignale der Meßeinrichtung 27 zugeführt werden, beeinflußt im Vollastfall über den Schalter 52 multiplikativ den aus dem Kennfeld ausgelesenen Wert. Dieser Regler arbeitet mit einer möglichst kleinen Zeitkonstante, wobei gleichzeitig über einen Mittelwertbilder 82 gemittelt wird. Bei einem Verlassen des Vollastbereiches wird der Regler 30 abgeschaltet, der Schalter S2 geöffnet und der Schalter S1 geschlossen. Somit wird im Teillastbereich der vom Mittelwertbildner 82 gespeicherte Regelfaktor wirksam, und zwar in der Weise, daß die aus dem Kennfeld 20 ausgelesenen Einspritzzeiten ti multiplikativ beeinflußt werden. Im Leerlauf findet ebenfalls eine Regelung auf das Leistungsmaximum statt, so daß hier auch der Regler 31 in Verbindung mit dem Schalter S2 verwendet werden kann. Falls die jeweils erforderlichen Um- bzw. Abschaltvorgänge des Reglers softwaremäßig gelöst werden, kommt der Bereichserkennungsstufe 83 im wesentlichen symbolische Bedeutung zu.

Mit Hilfe dieser Anordnung lassen sich auf einfache Weise die Kennfeldwerte der Einspritzzeit $t_i$ für den Teillastbereich mittels einer Vollast-Regelung an die wechselnder Betriebsbedingungen der Brennkraftmaschine anpassen. Es handelt sich hierbei um besonders preiswerte und einfache Maßnahmen, die ohne großen Aufwand rein softwaremäßig verwirklicht werden können.

Es können Situationen auftreten, in denen diese Neukalibrierung nach dem Vollastbetrieb nur relativ selten, wenn das Kraftfahrzeug z.B. über Tage hinweg nur im Teillastbereich, beispielsweise im Stadtverkehr betrieben wird, durchgeführt werden kann. Unter Umständen führt eine zu seltende Neukalibrierung der Kennfeldwerte zu einem nachteiligen Verhalten der Brennkraftmaschine im Teillastbereich. Eine wesentlich häufigere Neubestimmung des Regelfaktors wird jedoch dann erreicht, wenn auch im Teillastbereich kalibriert werden kann.

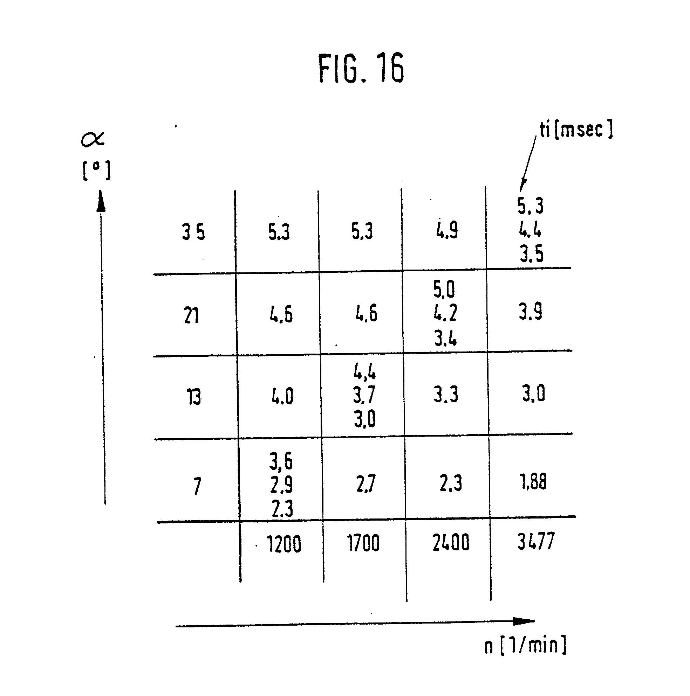

Zur Erläuterung dieses Verfahrens ist in Figur 16 ein Ausschnitt aus dem Kennfeld der Figur 12 dargestellt. Dabei wurden vier Kennfeldwerte, die besonders häufig im Teillastgebiet angefahren werden, zur Neukalibrierung des Systems ausgewählt. Der mittlere Wert ($t_i$ = 2,9 msec. für n = 1200 und$\alpha = 7^\circ$)

kommt im normalen Teillastbereich zur Anwendung. Der obere Wert ($t_i$ = 3,5 msec.) entspricht der Einspritzzeit für diesen Betriebspunkt der Brennkraftmaschine, wenn auf maximale Leistung geregelt würde. Diesel Wert wurde vorher experimentell ermittelt. Wird nun während der Fahrt einer dieser vier, in Figur 16 beispielhaft eingezeichneten Teillastpunkte angefahren und soll außerdem das System neu kalibriert werden, so findet für die Dauer des Kalibrierungsvorganges eine Änderung der Einspritzmenge von in diesem Beispiel $t_i$ = 2,9 msec. auf $t_i$ = 3,5 msec. statt. Über die Regelung auf maximale Leistung wird erkannt, ob diese vorgewählte Einspritzmenge den Leistungsmaximum in diesem Betriebsbereich der Brennkraftmaschine entspricht. Liegt eine Abweichung vor, die auf geänderte Lufttemperaturen bzw. -drücke gegenüber dem Normalzustand zurückzuführen ist, so wird ein Faktor ermittelt, der diesen Änderung ge recht wird. Dieser Faktor wird entsprechend dem vorher beschriebenen Verfahren an die Kennfeldwerte $t_i$ für den Teillastbereich angebracht.

Um den Fahrer des mit einer derartigen Brennkraftmaschine ausgerüsteten Kraftfahrzeuges durch die erhöhte Leistungsabgabe der Brennkraftmaschine während des Kalibriervorganges nicht zu verunsichern, sollte sich die Leistungsabgabe der Brennkraftmaschine durch den Kalibriervorgang nicht ändern.

Hierzu kann zum einen in die Zündung eingegriffen werden, nämlich daß die durch die Regelung auf Leistungsmaximum zwangsläufig erzielte Leistungserhöhung der Brennkraftmaschine gerade durch eine Rücknahme des Zündzeitpunktes kompensiert wird. Ist der Regelfaktor ermittelt, so kann wieder der normale Zündzeitpunkt zusammen mit den $be_{min}$-Kennfeldwerten unter Verwendung eines neuen Regelfaktors verwendet werden.

Zum anderen ist es auch möglich, die erhöhte Leistungsabgabe der Brennkraftmaschine während eines Kalibriervorganges dadurch zu verändern, daß der Regelfaktor nur an einem Teil der Zylinder der Brennkraftmaschine ermittelt wird. Hierfür sind jedoch getrennt ansteuerbare Einspritzventile Voraussetzung. Ein Teil der Zylinder wird wie beschrieben auf eine Regelung auf Leistungsmaximum umgeschaltet, bei den restlichen Zylindern wird die Einspritzzeit jedoch soweit reduziert, daß die Gesamtleistung im Mittel konstant bleiben. Im vorliegenden Beispiel ($\alpha = 7^\circ$, n = 1200) wird beispielsweise die Hälfte der Zylinder mit der Einspritzzeit $t_i$ = 3,6 msec. und die andere Hälfte der Zylinder mit $t_i$ = 2,3 msec. angesteuert. Der ermittelte Regelfaktor läßt sich nun auf alle Zylinder anwenden. Es kann sich jedoch auch als zweckmäßig erweisen, das Verfahren mit den restlichen Zylindern zu wiederholen und dann einen über die Zylinder gemittelten Regelfaktor zu benutzen.

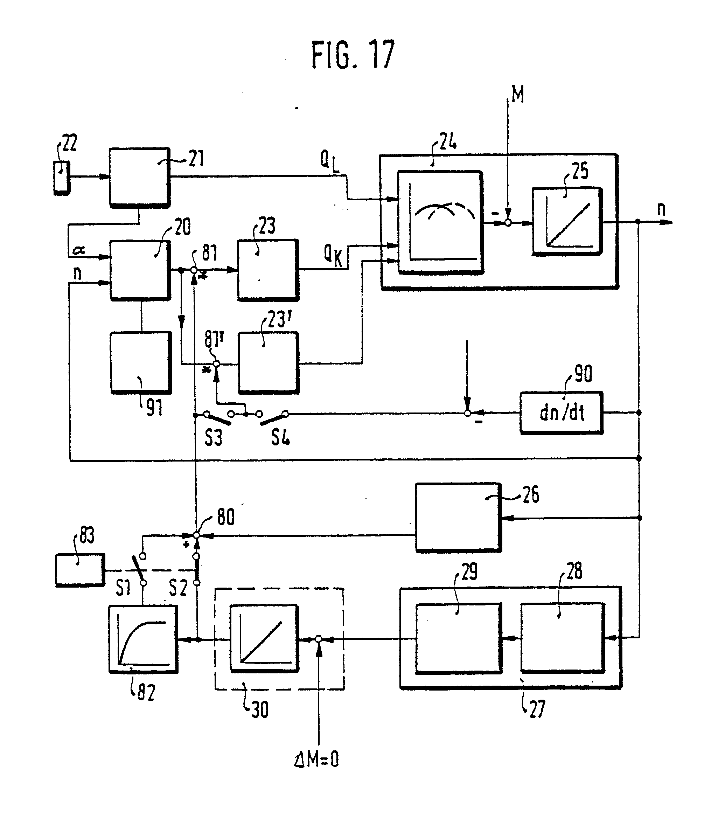

In Figur 17 ist ein Ausführungsbeispiel für dieses Regelverfahren dargestellt, wobei die zu Figur 15 identischen Blöcke mit gleichen Ziffern bezeichnet sind und auch nicht näher erläutert werden. Die Einspritzventile sind im vorliegenden Fall in zwei Gruppen 23 und 23' aufgeteilt. Dementsprechend sind auch zwei Multiplikationsstellen 81 und 81' für die den beiden Ventilgruppen 23 und 23' zugeführten Kennfeldwerte vorhanden. Diese Multiplikationsstellen 81 und 81' werden, wie schon beschrieben,über die Summationsstelle 80 entweder von dem Regler 30 oder dem Mittelwertbilder 82 angesteuert. Während des Kalibriervorganges wird beispielsweise die Ventilgruppe 23 mit den erhöhten Kennfeldwerten für Vollast und die Ventilgruppe 23' mit den verminderten Kennfeldwerten zur Aufrechterhaltung einer insgesamt konstanten Leistung angesteuert. Sollten dennoch kleine Leistungsänderungen in Form von Drehzahländerungen auftreten, so kann ein Regelkreis 90, der auf Drehzahländerungen empfindlich ist, diese ausregeln. Dazu wird ein Schalter S4 bei geöffnetem Schalter S3 geschlossen, so daß der Regelkreis 90 über den Schalter S4 und die Multiplikationsstelle 81' auf die Ventilgruppe 23' einwirkt. Ist der Kalibriervorgang beendet, so wird dieser Schalter S4 geöffnet und Schalter S3 geschlossen, so daß die Additionsstelle 80 mit den Multiplikationsstellen 81 und 81' leitend verbunden ist.

Die zweite Möglichkeit zur Konstanthaltung der Leistungsabgabe der Brennkraftmaschine während eines Kalibriervorganges ist mittels einer an dem Kennfeld 20 angeschlossenen Zündungsanlage 91 angedeutet. In diesem Fall ist eine Aufteilung der Ventile der Brennkraftmaschine in Ventilgruppen nicht erforderlich, da die erhöhte Leistungsabgabe der Brennkraftmaschine durch eine Vergrößerung der Einspritzzeit während des Kalibriervorganges über eine Zurücknahme des Zündzeitpunktes in der Zündanlage 91 realisiert wird. Hierzu kann dann im Kennfeld statt des verminderten Wertes für die Einspritzzeit ein Wert für die Zurücknahme des Zündwinkels der Brennkraftmaschine gespeichert werden.

Mit Hilfe der in Figur 17 dargestellten Anordnung ist eine häufige Neukalibrierung des Regelfaktors für die Kennfeldwerte der Einspritzzeit im Teillastbereich möglich und damit auch ein verbessertes Betriebsverhalten der Brennkraftmaschine insbesondere im Teillastbereich garantiert.

Die Erfindung ist nicht auf Kraftstoffzumeßsysteme beschränkt, bei denen eine intermittierende Einspritzung, also eine Zumessung über die Öffnungszeitdauer der Einspritzventile durchgeführt wird. Sie läßt sich in ebenso vorteilhafter Weise auch auf elektronisch gesteuerte Einspritzsysteme mit einer kontinuierlichen Einspritzung, wie sie beispielsweise in K- bzw. KE-Jetronic-Systemen realisiert ist, anwenden. Die Einspritzung des Kraftstoffes erfolgt über einen Mengenteiler und die entsprechenden Einspritzventile. Der

Steuerkolben des Mengenteilers wird durch an sich bekannte elektrohydraulische Drucksteller verstellt. Dabei erfolgt die Ansteuerung des Druckstellers durch ein elektronisches Steuergerät, dessen Hauptsteuergrößen durch Drehzahl- und Lastinformationen (Luftmasse, Luftmenge, Saugrohrdruck, Drosselklappenstellung) gegeben werden. Besonders vorteilhaft erweist sich hierbei die Verwendung einer groben, aber sehr einfachen Vorsteuerung z.B. einer Drosselklappenwinkel-Drehzahl-Vorsteuerung mittels eines Kennfeldes mit einer Feinanpassung durch eine überlagerte Regelung. Es versteht sich, daß die Absolutwerte der Kennfeldgrößen bei einer kontinuierlichen Einspritzung sich von denen bei intermittierender Einspritzung unterscheiden müssen, da entweder die Einspritzmengen pro Hub oder pro Zeiteinheit zugrundegelegt sind. Weiterhin müssen von dem Steuergerät folgende die Gemischzumessung beeinflussende Funktionen erfüllt werden: Beschleunigungsanreicherung, Vollastanreicherung, Teillastabmagerung, Lambda-Regelung, Höhenkorrekturabmagerung. Als der Vorsteuerung überlagerte Regelungen kommen grundsätzlich die schon beschriebenen Regelverfahren, beispielsweise Lambda-Regelungen oder Extremwertregelungen zur Regelung auf beispielsweise das Verbrauchsminimum, die maximale Leistung oder auch die Laufruhe in Frage.

Weiterhin läßt sich der Gegenstand der Erfindung auch auf selbstzündende Brennkraftmaschinen anwenden. Als Kennfeldeingangsgröße können dann beispielsweise die Drehzahl und anstelle der Drosselklappenstellung die Fahrpedalstellung herangezogen werden. Die beschriebenen Ausführungsbeispiele lassen sich durch den Fachmann auf dem Gebiet der Gemischzumessung für Brennkraftmaschinen ohne weiteres auf selbstzündende Brennkraftmaschinen übertragen.

Die Erfindung wurde anhand von Ausführungsbeispielen für die Kraftstoffzumessung erläutert und beschrieben. Sie ist jedoch nicht hierauf beschränkt, sondern läßt sich in vorteilhafter Weise auch auf andere, bei Brennkraftmaschinen verwendete Regelverfahren anwenden. Beispielhaft seien hier folgende Systeme zur Steuerung bzw. Regelung von Betriebskenngrößen von Brennkraftmaschinen erwähnt: Kraftstoff-Luft-Gemischzumessung, Zündzeitpunktbestimmung, Ladedrucküberwachung, insbesondere bei Turboladern, Abgasrückführungsrate oder auch Leerlaufdrehzahlüberwachung. Eine Anwendung der Erfindung auf die aufgeführten Systeme kann vom betreffenden Fachmann ohne weiteres durchgeführt werden, da der Kern der Erfindung anhand der Ausführungsbeispiele deutlich offenbart wurde.

## Ansprüche

1. Einrichtung zur Steuerung von Maschinenvariablen einer Brennkraftmaschine wie Einspritzzeit oder Zündung unter Benutzung eines Kennfeldes (20), aus dem ausgehend von eingebbaren Betriebskenngrößen wie Drehzahl und Last Steuerwerte für die Maschinenvariablen auslesbar sind,
   - mit Mitteln einer betriebskenngrößenabhängigen Regelung, durch die die im Kennfeld gespeicherten diskreten Steuerwerte modifizierbar sind,
   - die Regelung als Extremwertregelung auf maximale Leistung mit insbesondere den Kraftstoffzumeßsignalen oder Zündzeitpunktsignalen oder weiteren Betriebskenngrößen überlagerten Testsignalen ausgebildet ist, dadurch gekennzeichnet, daß
   - Mittel vorgesehen sind, die mit den von dem Regelkreis in einem bestimmten Betriebsbereich der Brennkraftmaschine, vorzugsweise dem Teillastbereich, ermittelten Korrekturwerten die Gesamtheit der Vorsteuerwerte des Kennfeldes beeinflussen, und
   - die Extremwertregelung auf maximale Leistung kurzzeitig in betriebsparameterabhängigen Zeitintervallen aktiviert wird.

2. Einrichtung nach Anspruch 1, dadurch gekennzeichnet, daß die Extremwertregelung auf maximale Leistung im Teillastbereich zylinderabhängig durchgeführt wird.

3. Einrichtung nach Anspruch 2, dadurch gekennzeichnet, daß zylinderspezifische Korrekturfaktoren gemittelt werden.

4. Einrichtung nach einem der vorangehenden Ansprüche, dadurch gekennzeichnet, daß während der Zeitdauer der Aktivierung der Extremwertregelung auf maximale Leistung im Teillastbereich der Zündzeitpunkt in Richtung spät verstellt wird.

5. Einrichtung nach einem der vorangehenden Ansprüche, dadurch gekennzeichnet, daß mittels eines Regelkreises, der in die Zündung bzw in die zylinderspezifische Kraftstoffzumessung eingreift, die Drehzahl der Brennkraftmaschine während der Zeitdauer der Aktivierung der Extremwertregelung auf

maximale Leistung konstant gehalten wird.

6. Einrichtung nach einem der vorangehenden Ansprüche, dadurch gekennzeichnet, daß für ausgewählte Betriebsbereiche im Teillastbereich in dem Vorsteuerkennfeld (20) Signale insbesondere Kraftstoffzumeßsignale oder andere Betriebskenngrößen für einen minimalen spezifischen Kraftstoffverbrauch sowie für maximale Leistung abgelegt sind.

## Claims

1. Device for controlling engine parameters of an internal combustion engine, such as injection time or ignition, using an engine map (20) from which control values for the engine parameters can be read out on the basis of operating characteristics such as rotational speed and load which can be input,
   - comprising means of an operating-characteristic-dependent closed-loop control by means of which the discrete control values stored in the engine map can be modified,
   - the closed-loop control is constructed as extreme-value control for maximum power with test signals superimposed, in particular, on the fuel proportioning signals or ignition time signals or other operating characteristics, characterized in that
   - means are provided which influence by means of the correction values determined by the control loop in a particular operating range of the internal combustion engine, preferably the part-load range, the totality of the precontrol values of the engine map, and
   - the extreme-value control for maximum power is activated for a short time in operating-parameter-dependent time intervals.

2. Device according to Claim 1, characterized in that the extreme-value control for maximum power in the part-load range is carried out cylinder-dependently.

3. Device according to Claim 2, characterized in that cylinder-specific correction factors are averaged.

4. Device according to one of the preceding claims, characterized in that the ignition time is adjusted in the direction of late during the period of activation of the extreme-value control for maximum power in the part-load range.

5. Device according to one of the preceding claims, characterized in that the rotational speed of the internal combustion engine is kept constant during the period of activation of the extreme-value control for maximum power by means of a control loop which intervenes in the ignition or in the cylinder-specific fuel proportioning, respectively.

6. Device according to one of the preceding claims, characterized in that signals, particularly fuel proportioning signals or other operating characteristics for minimum specific fuel consumption and for maximum power are deposited in the precontrol engine map (20) for selected operating ranges in the part-load range.

## Revendications

1. Dispositif pour la commande des paramètres de fonctionnement d'un moteur à combustion interne, tels que la durée d'injection ou l'allumage, en utilisant un champ caractéristique (20) dont peuvent être extraites, à partir de grandeurs caractéristiques du fonctionnement qui peuvent y être introduites, telles que la vitesse de rotation et la charge, des valeurs de commande pour les paramètres du moteur,
   - avec des moyens d'une régulation en fonction des grandeurs caractéristiques du fonctionnement, grâce à laquelle les valeurs de commande discrètes mémorisées dans le champ caractéristique peuvent être modifiées,
   - la régulation est réalisée sous la forme d'une régulation de valeur extrême à puissance maximale avec notamment des signaux de test superposés aux signaux de dosage de carburant ou aux signaux d'instant d'allumage ou à d'autres grandeurs caractéristiques du fonctionnement, dispositif caractérisé en ce que :
   - des moyens sont prévus qui, avec les valeurs de correction déterminées par le circuit de réglage

dans une étendue de fonctionnement déterminée du moteur à combustion interne, de préférence la zone de charge partielle, influencent la totalité des valeurs de précommande du champ caractéristique,
- la régulation de valeur extrême à puissance maximale est temporairement activée à des intervalles de temps dépendant de paramètres de fonctionnement.

2. Dispositif selon la revendication 1, caractérisé en ce que la régulation de valeur extrême à puissance maximale est mise en oeuvre dans la zone de charge partielle en fonction des cylindres.

3. Dispositif selon la revendication 2, ca ractérisé en ce que la moyenne des facteurs de correction spécifiques des cylindres est établie.

4. Dispositif selon une des précédentes revendications, caractérisé en ce que, pendant la durée de l'activation de la régulation de valeur extrême à puissance maximale dans la zone de charge partielle, l'instant de l'allumage est décalé dans le sens du retard.

5. Dispositif selon une des précédentes revendications, caractérisé en ce qu'au moyen d'un circuit de réglage, qui agit sur l'allumage ou sur le dosage du carburant spécifique des cylindres, la vitesse de rotation du moteur à combustion interne est maintenue constante pendant la durée de l'activation de la régulation de valeur extrême à puissance maximale.

6. Dispositif selon une des précédentes revendications, caractérisé en ce que, pour des zones de fonctionnement sélectionnées dans la zone de charge partielle, des signaux, notamment des signaux de dosage de carburant ou d'autres grandeurs caractéristiques de fonctionnement pour une consommation spécifique minimale de carburant ainsi que pour une puissance maximale, sont déposés dans le champ caractéristique de précommande (20).

FIG. 1

a)

Pe
Pe =konst.
0,8
0,9
1,0
1,1
1,2
λ

b)

mL , mK
Pmax
be min
Pe = konst.
0,8
0,9
1,0
1,1
1,2
λ

FIG. 2

22
21
$Q_L$
+
$\Delta Q_L$
$\alpha$
20
n
ti
+
+
$Q_K$
$\Delta$ti
23
M
24
25
n
26
$\alpha$
29
28
32
31
-IST
SOLL
30
27
$\Delta$N = 0

FIG. 3
Pe
bar
7
6
5
4
3
0,8
0,9
1,0
1,1
1,2
λ
Δ Pe

FIG. 4

Â
be min
08
09
10
11
12
λ

0°
180°
λ < λ be min
λ > λ be min

FIG. 5

M
22
21
24
ṁL
25
n
20
23
ṁK
n
32
31
35
λ
λ
λ̄SOLL
30
36
α
n
27

FIG. 6

DREHZAHL
LAST
KENN-
FELD
te
x
+
ti
MOTOR
a)
REGLER
MESS-
EIN-
RICHTUNG

DREHZAHL
LAST
KENN-
FELD
ti
MOTOR
b)
REGLER
MESS-
EIN-
RICHTUNG

FIG. 7

a)
b)
c)

FIG. 8

A
B
MW
C
D
Ist
E
Soll
S1
S2
S3
I
II

FIG. 9

α
ti
n

FIG.10

B,$t_b$
A,$t_a$
α
n

1,0
16 r
$t_A$
$t_B$
t

FIG. 11

M
21
22
24
25
QL
ΔQL
n
20
QK
α
ti
*
+
+
n
Δti
23
26
43
Ao
Bo
S1
S2
S3
40
42
41
27
30

FIG. 12

α [°] / n [1/min] — ti [msec]

| α [°] | | | | | | | | |
|---|---|---|---|---|---|---|---|---|
| 90 | 5,8 | 5,6 | 5,6 | 6,0 | 6,4 | 6,6 | 7,1 | 7,2 |
| 56 | 5,8 | 5,8 | 5,6 | 5,6 | 5,5 | 5,0 | 5,6 | 6,0 |
| 35 | 5,6 | 5,3 | 5,3 | 5,3 | 4,9 | 4,4 | 5,1 | 5,3 |
| 21 | 4,8 | 4,9 | 4,6 | 4,6 | 4,2 | 3,9 | 3,6 | 2,9 |
| 13 | 4,4 | 4,6 | 4,0 | 3,7 | 3,3 | 3,0 | 1,7 | 1,2 |
| 7 | 4,1 | 3,6 | 2,9 | 2,7 | 2,3 | 1,8 | 1,2 | 1,2 |
| 3 | 3,5 | 2,4 | 2,3 | 1,7 | 1,2 | 1,2 | 1,2 | 1,2 |
| 1 | 2,3 | 2,0 | 1,4 | 1,2 | 1,2 | 1,2 | 1,2 | 1,2 |
| n [1/min] | 600 | 850 | 1200 | 1700 | 2400 | 3500 | 4800 | 7000 |

FIG. 13
$f_1/n$
$f_1$
I/O
I/O
50
51
52
53
54
55
56
57
58
59
60
61
62
63
64
65
66
67
68
69
70
71
72
73
74
75
76
77
78
79
80

FIG. 14

M
Mmax
a)
m = M/te ~ η
te
te'
n = konst
QL = konst
be
η
η ~ M/te
b)
be
be min
te

FIG. 15

M
24
22
21
$Q_L$
25
n
20
23
α
ti
81
$Q_K$
n
26
80
83
S1
S2
29
28
31
82
30
27
ΔM=0

FIG. 16

| α [°] | | | | |
|---|---|---|---|---|
| 35 | 5.3 | 5.3 | 4.9 | 5.3<br>4.4<br>3.5 |
| 21 | 4.6 | 4.6 | 5.0<br>4.2<br>3.4 | 3.9 |
| 13 | 4.0 | 4,4<br>3.7<br>3.0 | 3.3 | 3.0 |
| 7 | 3,6<br>2.9<br>2.3 | 2.7 | 2.3 | 1,88 |
| | 1200 | 1700 | 2400 | 3477 |

ti [msec]

n [1/min]

FIG. 17

M
22
21
Q_L
24
25
n
20
23
81
α
n
Q_K
23'
81'
90
dn/dt
91
S3
S4
26
80
83
S1
S2
29
28
82
30
27
ΔM=0